# EUROPEAN PATENT APPLICATION

(11) **EP 4 560 307 A2**
(43) Date of publication of application: **28.05.2025**
(21) Application number: 24223914.3
(22) Date of filing: 13.11.2019
(51) Int. Cl.: G01N 27/447

(54) **METHOD, SOLUTION AND KIT FOR PREPARING A TISSUE SAMPLE FOR 3D IMAGING**

(30) Priority: 14.11.2018 GB 201818567
(62) Divisional of application: 19809553.1
(71) Applicant: The Francis Crick Institute Limited, London, Greater London NW1 1AT (GB)
(72) Inventor: BEHRENS, Axel, London, NW1 1AT (GB); MESSAL, Hendrik, London, NW1 1AT (GB)
(74) Representative: D Young & Co LLP

(57) **Abstract**

The present invention relates to a solution for the preparation of a tissue sample for the purpose of three dimensional (3D) imaging. The invention also relates to methods and uses involving the solution.

## Description

### FIELD OF THE INVENTION

The present invention relates to a solution for the preparation of a tissue sample for the purpose of three dimensional (3D) imaging. The invention also relates to methods and uses involving the solution.

### BACKGROUND TO THE INVENTION

Histology is the study of the anatomy of cells and tissues of plants and animals using microscopy. It is commonly studied using a light microscope or electron microscope, the specimen having been sectioned, stained, and mounted on a microscope slide. The ability to visualize or differentially identify microscopic structures is frequently enhanced through the use of staining. Histology is an essential tool of biology and medicine.

Histopathology is the study of diseased tissue, and is an important tool in anatomical pathology, since accurate diagnosis of cancer and other diseases usually requires histopathological examination of samples. Pathologists may perform histopathological examination and provide diagnostic information based on their observations. Pathologists examine stained tissue preparations with bright-field microscopy to estimate various types of histological and pathological findings such as tissue composition, tissue architecture and morphology, cell morphology, cell malignancy, degree of inflammation and fibrosis, depth of tumour invasion, presence of tumour components in the cut margin, and lymph node metastasis status.

Conventional methods of histology and histopathology involve staining and imaging using microscopy. However, although conventional methods provide information about morphologic changes of cells and tissues, they also have fundamental limitations. For instance, the conventional methods can provide only planar 2-dimensional (2D) images, limiting their ability to observe 3-dimensional (3D) structures consisting of a variety of cells in diverse anatomical structures. In addition, particularly in a histopathological diagnosis for large pathological specimens such as surgically resected specimens, only representative lesions identified by a macroscopic observation are typically evaluated. Therefore, a concern that an additional critical lesion may be present in the non-evaluated areas still remains to be addressed. Traditional 2D histological assessment of tissues limits proper insights into 3D tissue structure. For example, to explore the connectivity of local cellular networks, 3D imaging is essential.

Preparation of tissue samples for 3D imaging has, however, proven to be a challenge. Previous techniques for preparing tissue samples for 3D imaging have focussed on increasing tissue transparency to decrease light scattering properties of multicellular layers and increase light penetrance, both of which are important for light microscopy. Previous techniques have been developed on neural tissues. Whilst their application increases transparency also in other tissues, they do not allow for staining, especially by immunolabelling.

Furthermore, previous techniques used in the art for the preparation of tissue samples for 3D imaging have utilised various increased fixation of the samples, for example hydrogel embedding, as it was considered in the art that such increased fixation was necessary in order to achieve a tissue sample suitable for 3D imaging.

However, the use of such increased fixation is disadvantageous, as it decreases the quality of the tissue sample and reduces the number and type of different antibodies that may be employed in, for example, immunolabelling of the sample. **It is** advantageous to be able to image numerous antibodies of different specificities in one tissue sample, as often there is a limited amount of sample available (e.g. in a clinical or diagnostic setting, e.g. from a biopsy).

This is not possible with current methods in the art for preparing tissue samples for 3D imaging, due to the limitation of the number and type of antibodies that may be used on the resulting tissue sample. In this regard, the resulting tissue sample is not amenable to labelling with a wide range of antibody types and specificities. Without wishing to be bound by theory, this may be due to masking of antigens during the increased fixation steps.

There is, therefore, a need in the art for alternative methods of preparing tissue samples for 3D imaging, for example that facilitate the use of a wider range of antibodies for immunolabelling of a sample.

### SUMMARY OF THE INVENTION

The present inventors have surprisingly found that a method as described herein may be used to prepare tissue samples for 3D imaging, particularly by immunolabelling using a broad range of antibodies. The inventors surprisingly found that a less complex method may be used to prepare the tissue samples than has been used previously in the art. The present Examples demonstrate that additional fixation, for example by hydrogel or glutaraldehyde (GA), is not necessary in order to achieve tissue samples suitable for 3D imaging by immunolabelling.

As such, the present invention provides a highly advantageous method for preparing tissue samples, and a solution that may be used in said method.

Furthermore, previous techniques for tissue sample preparation have employed a solution with a pH of 9 or more, as it was considered that such a pH was required in order to render tissue samples transparent for 3D imaging purposes. However, the present inventors have surprisingly found that a solution which comprises a detergent and a buffer solution at a pH below 9 may be used successfully in the preparation of tissue samples for 3D imaging purposes. The inventors also found that the solution according to the invention may be used at higher temperatures than in previous techniques.

The present invention provides a solution for preparing a tissue sample for 3D imaging, wherein said solution comprises a buffer solution with a pH below 9, and a detergent.

As demonstrated in the present Examples, the solution according to the present invention may be used to prepare a wide variety of tissue samples using a wide variety of antibodies. The present invention therefore advantageously has general applicability in preparing tissue samples for 3D imaging. The Examples also demonstrate that the present invention may facilitate imaging with a resolution comparable to 2D histochemistry, and that tissue integrity and organ architecture are maintained.

The present invention is also time and cost-effective, and does not require special equipment or sample procurement (e.g. hydrogel embedding, GA fixation or the like). This represents a further advantage over techniques previously used in the art. As described above, without wishing to be bound by theory, techniques in the prior art may have disadvantages associated with over-fixation, complicated epitope retrieval and cross-linking which must be overcome in order to prepare a tissue sample that is suitable for imaging by achieving tissue integrity, preserving organ architecture and producing a reliable signal when immunolabelled.

Therefore, the present invention may allow for the use of a simpler fixation step, such as reducing the time that the tissue sample is exposed to fixative or using a conventional fixative, for example neutral buffered formalin (NBF).

The present invention advantageously facilitates the provision of a wide range of tissue samples for 3D imaging using a wide range of antibodies. Traditional histological techniques for 2D imaging may not be effective across a wide range of tissues and traditional histological techniques may not work with a wide range of antibodies, including both broad and narrow-specificity antibodies.

In another advantage, the invention also allows for imaging of whole and intact tissue samples without the requirement for serial sectioning of the sample. The invention also advantageously allow for 3D imaging of tissue samples in partly sectioned or serially sectioned to a matching or improved degree over traditional histological techniques.

The ability to provide immunolabelled whole and intact tissue samples for 3D imaging may be particularly advantageous for pathological or diagnostic purposes. For example, the invention may allow for 3D tumor imaging and for determining tumor margins in a tissue sample. This is advantageous over conventional histological analysis which requires serial sectioning of tissue samples which is time consuming and costly.

In conventional histology for pathological or diagnostic purposes, it is common to sample part of the whole tissue and it is known that undersampling can result in missing essential markers or whole tumors, which can lead to incorrect conclusions on the presence or absence of a disease state. Hence, the invention may advantageously reduce the likelihood that a disease state will go undetected and advantageously provides an improved method for determining the presence or absence of a disease state in a tissue sample, i.e. in a diagnostic setting.

In one advantage, the method or use of the invention provides an improved tissue sample for 3D imaging, which allows for a wider range of immunolabelling from the tissue sample for 3D imaging.

By way of further advantage, the present invention may also be used with archival tissue samples, such as those in paraffin blocks.

It is known that tissue samples that are archived (stored) in paraffin blocks are contacted with and embedded in paraffin for storage (paraffin-embedded) using standard methods. It is also well-known that in order to retrieve the tissue samples from storage, the stored tissue sample is then deparaffinized and subsequently processed for imaging. Conventional immunolabelling methods are not suitable for use with samples which have been paraffin-embedded, whereas the invention as described herein is surprisingly suitable for use with such samples.

The solution of the invention as described herein can be used in the preparation of tissue samples. As used herein, the term "preparation" as used herein is intended to encompass any aspect of producing a tissue sample before it is subject to 3D imaging.

In one aspect the tissue sample may be from a mouse, rat, rabbit, cow, pig or non-human primate. In a preferred aspect the tissue sample is from a human.

The methods of the invention find many uses, for example in medicine and research. The methods of the invention may be used to diagnose, determine the presence or absence, or monitor a disease state.

The methods of the invention may be used to study healthy or diseased tissue or to assess the efficacy of candidate agents in disease modification. Also provided are solutions, kits and uses thereof that find use in practicing the methods of the invention.

The solution can also be used for the preparation of three-dimensional cell culture models for staining.

In one embodiment, the present invention provides a method for preparing a tissue sample for 3D imaging, said method comprising treating said tissue sample with a solution, wherein the solution comprises a buffer solution with a pH below 9 and a detergent.

In another embodiment, the present invention provides a method for preparing a tissue sample for 3D imaging, said method comprising:
a) providing a tissue sample;
b) fixing the tissue sample;
c) optionally archive storing the tissue sample;
d) treating the tissue sample with a solution, wherein the solution comprises a buffer solution with a pH below 9 and a detergent;
e) optionally immunolabelling the tissue sample;

Suitably, according to method of the invention, said tissue sample may not have been hydrogel embedded and/or may not have been fixed with glutaraldehyde.

Suitably, according to the method of the invention, 3D imaging may be based on immunostaining.

According to method of the invention, a) the detergent may be SDS or zwitterionic, preferably Zwittergent^{®} detergent, wherein the zwittergent detergent is selected from any one of n-Octyl-N,N-dimethyl-3-ammonio-1-propanesulfonate, n-Decyl-N,N-dimethyl-3-ammonio-1-propanesulfonate, n-Dodecyl-N,N-dimethyl-3-ammonio-1-propanesulfonate, n-Tetradecyl-N,N-dimethyl-3-ammonio-1-propanesulfonate, and n-Hexadecyl-N,N-dimethyl-3-ammonio-1-propanesulfonate; and/or b) the pH of said buffer solution may be less than 8.5, less than 8, less than 7.5 or 7; and/or c) the buffer solution may be boric acid or citrate buffered solution, preferably boric acid.

Suitably, in the method of the invention, the solution may be used at a temperature of between about 40°C and about 60°C, preferably about 50°C and about 60°C, more preferably at a temperature of about 55°C or about 54°C.

Suitably, according to method of the invention, said tissue sample may be from: a) a mouse, rat, rabbit, cow, pig or non-human primate; or b) a human, preferably wherein said tissue sample is a surgically resected specimen.

Suitably, according to method of the invention, said tissue sample may be fixed using neutral buffered formalin, preferably 10% neutral buffered formalin.

Suitably, the method of the invention further comprises a step of determining the presence or absence of a disease state in the tissue sample.

Suitably, according to method of the invention, said tissue sample may have been paraffin embedded.

Suitably, according to method of the invention, said tissue sample may be an intact tissue sample.

In one embodiment, the invention provides a solution for preparing a tissue sample for three dimensional (3D) imaging, wherein said solution comprises a buffer solution with a pH below 9 and a detergent.

Suitably, said 3D imaging may be based on immunostaining.

Suitably, a) the detergent may be SDS or zwitterionic, preferably Zwittergent^{®} detergent, wherein the zwittergent detergent is selected from any one of n-Octyl-N,N-dimethyl-3-ammonio-1-propanesulfonate, n-Decyl-N,N-dimethyl-3-ammonio-1-propanesulfonate, n-Dodecyl-N,N-dimethyl-3-ammonio-1-propanesulfonate, n-Tetradecyl-N,N-dimethyl-3-ammonio-1-propanesulfonate, and n-Hexadecyl-N,N-dimethyl-3-ammonio-1-propanesulfonate; and/or b) the pH of said buffer solution may be less than 8.5, less than 8, less than 7.5 or 7; and/or c) the buffer solution may be boric acid or citrate buffered solution, preferably boric acid.

Suitably, the solution may be used at a temperature of between about 40°C and about 60°C, preferably about 50°C and about 60°C, more preferably at a temperature of about 55°C or about 54°C.

Suitably, according to the solution, said tissue sample may be from: a) a mouse, rat, rabbit, cow, pig or non-human primate; or b) a human, preferably wherein said tissue sample is a surgically resected specimen.

In one embodiment, the invention provides a method for preparing the solution according to the invention, said method comprising combining said buffer solution with a pH below 8 with said detergent.

In one embodiment, the invention provides a use of a solution according to the invention for preparing a tissue sample for 3D imaging.

Suitably, the use is for determining the presence or absence of a disease state.

In one embodiment, the invention provides a solution for preparing a tissue sample for three dimensional (3D) imaging, wherein said solution comprises a buffer solution with a pH below 9 and a detergent, wherein the detergent is a Zwittergent^{®}.

Suitably, the pH of the buffer is below 9. Suitably, the pH of the buffer is below 8.5. Suitably, the pH of the buffer is below 8.

Suitably, the buffer solution is not PBS. Suitably the buffer solution is boric acid or citric acid.

In one embodiment, the invention provides a solution for preparing a tissue sample for three dimensional (3D) imaging, wherein said solution comprises a buffer solution with a pH less than 8.5, preferably less than pH 8, and a detergent, wherein the buffer solution is boric acid.

Suitably, the detergent is zwitterionic.

In one embodiment, the invention provides a solution for preparing a tissue sample for three dimensional (3D) imaging, wherein said solution comprises a buffer solution with a pH of 7 and a detergent.

Suitably, the detergent is SDS.

Suitably, the detergent is zwitterionic or zwittergent^{®}.

In one embodiment, the invention provides a solution for preparing a tissue sample for three dimensional (3D) imaging, wherein said solution comprises a buffer solution with a pH below 8.5 and a detergent, wherein the detergent is SDS and wherein the buffer solution is boric acid solution.

### LIST OF FIGURES

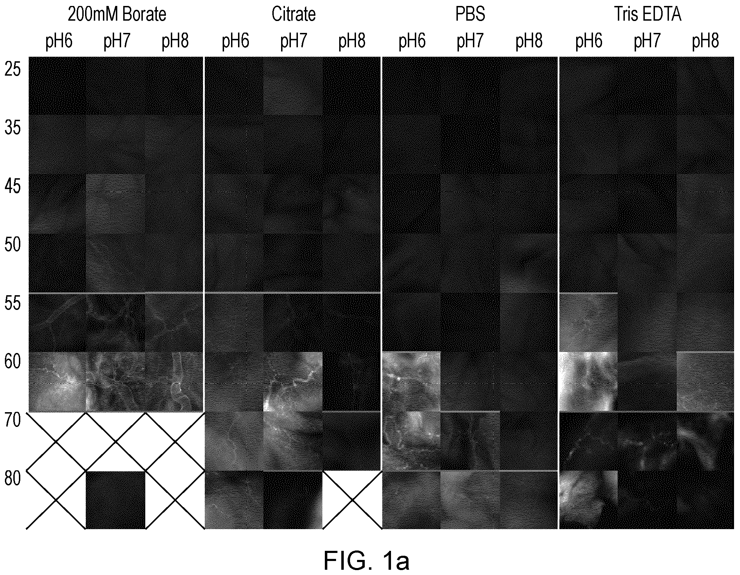

**Figure 1****. Epitope recovery enables whole tissue immunolabelling. a)** Intact pancreatic lobes were treated for 16 hrs with the indicated buffers containing 4% SDS at the indicated temperatures. Shown are stainings for Krt19 (pancreatic ducts). Blue lines indicate minimum temperature above which staining was observed; red lines indicate maximum temperature above which sample damage was noted. Crosses indicate sample loss.

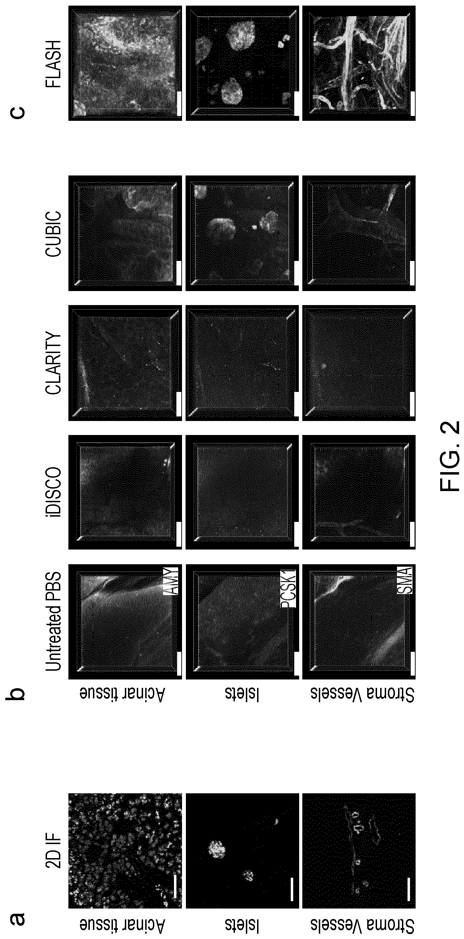

**Figure 2****. Tissue clarification does not suffice for immunolabelling. a)** Immunofluorescence staining for Amylase (acinar cells), PCSK1 (islets of Langerhans) and SMA (stroma and vasculature) on paraffin-embedded and sectioned pancreas (4 µm) after heat-mediated antigen retrieval. Scale bars 100 µm. **b)** Staining with the same antibodies as in (a) on untreated control (PBS) pancreas and pancreata clarified with iDISCO, Clarity and CUBIC buffers. Shown are 3D views of a representative region. Scale bars 100 µm. **c)** 3D reconstruction of pancreata stained with the indicated antibodies after 16 hrs FLASH treatment.

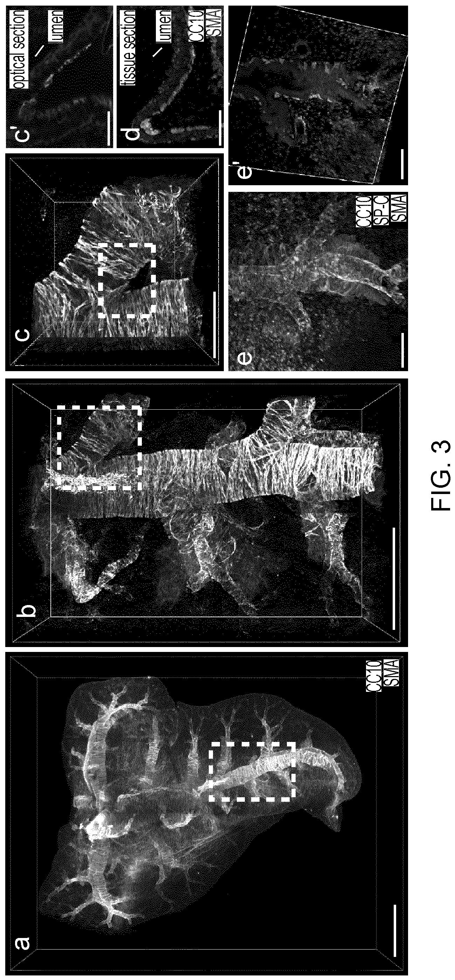

**Figure 3****. FLASH enables immunostaining of lung. a-d)** Staining for CC10 (Clara cells) and SMA (myoepithelial cells and vasculature). **a)** 3D view of an intact lung lobe showing the bronchiolar tree. Scale bar 1 mm. **b)** Magnification of the area indicated in (a) (white box) revealing intricate arrangement of myoepithelial cells spanning around the bronchiolar ducts. Scale bar 500 µm. **c)** Magnified view of the region indicated in (b) (white box). Scale bar 150 µm. c') Optical section demonstrating intact compartmentalization of the epithelial and myoepithelial tissue layers. Scale bar 50 µm. **d)** Comparative staining of paraffin embedded lung tissue section (4 µm). Scale bar 50 µm. **e)** Staining for CC10, SMA and Sp-C (alveolar type II cells). Scale bars 100 µm.

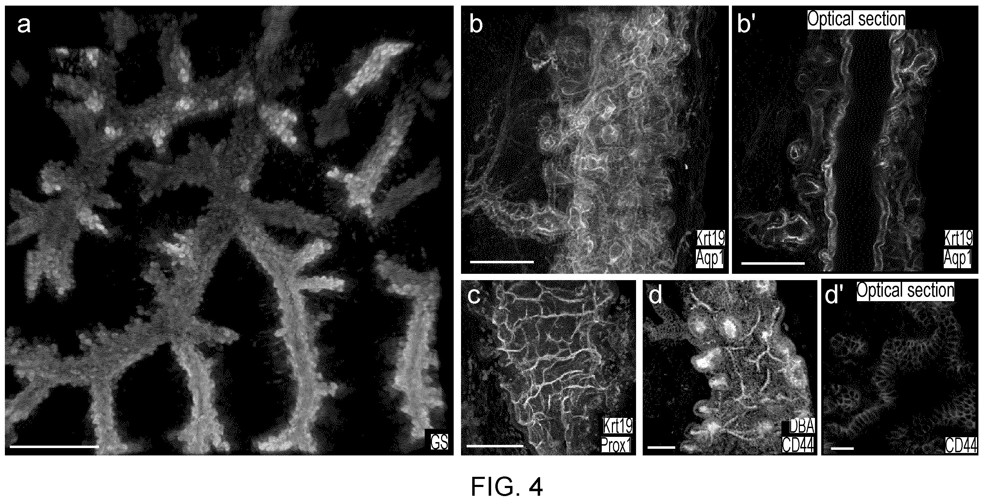

**Figure 4****. FLASH enables immunostaining of liver. a)** 3D view of a liver segment stained for GS (pericentral hepatocytes). Scale bar 300 µm. **b)** 3D reconstruction and optical section (b') of the bile duct stained for Krt19 (duct cells) and Aqp1 (microvasculature). Scale bars 200 µm. **c)** Staining for Krt19 and Prox1 (lymphatic endothelium, nuclear). Scale bar 100 µm. **d)** Bile duct stained with DBA (duct cells) and CD44 (bile duct cells). Scale bar 50 µm. **d')** Optical section of the duct shown in (d) demonstrating maintained CD44 localisation to lateral cell membranes. Scale bar 20 µm.

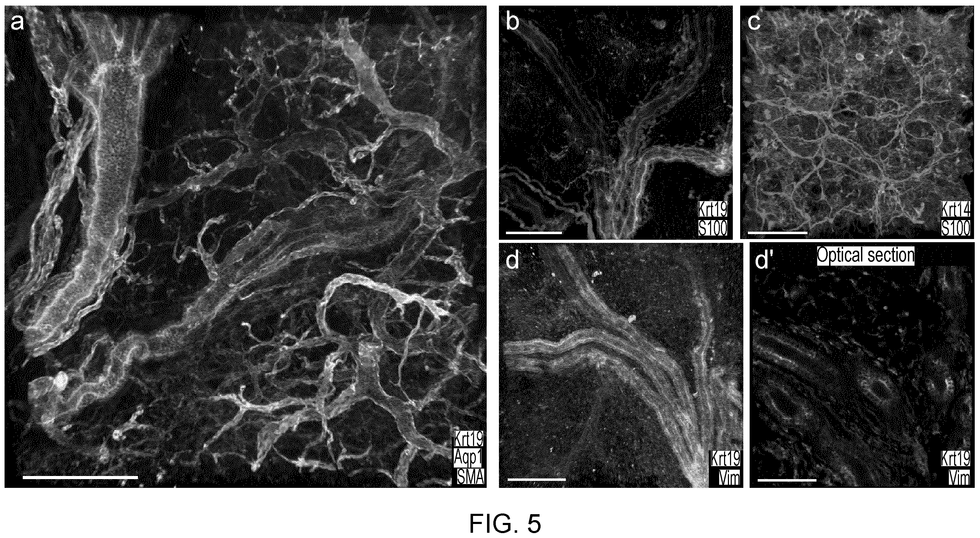

**Figure 5****. FLASH enables immunostaining of the lacrimal gland. a)** 3D reconstruction of lacrimal gland stained for Krt19 (duct cells), SMA (Stroma) and Aqp1 (microvasculature). Scale bar 200 µm. **b)** Staining for Krt19 and S100 (nerves). Scale bar 200 µm. **c)** Staining for S100 and Krt14 (myofibroblasts). Scale bar 100 µm. **d)** Staining for Krt19 and vimentin (fibroblasts). Scale bar 200 µm. **d')** Optical section through the view in (d) demonstrating compartmentalization of mesenchymal and epithelial tissue layers. Scale bar 100 µm.

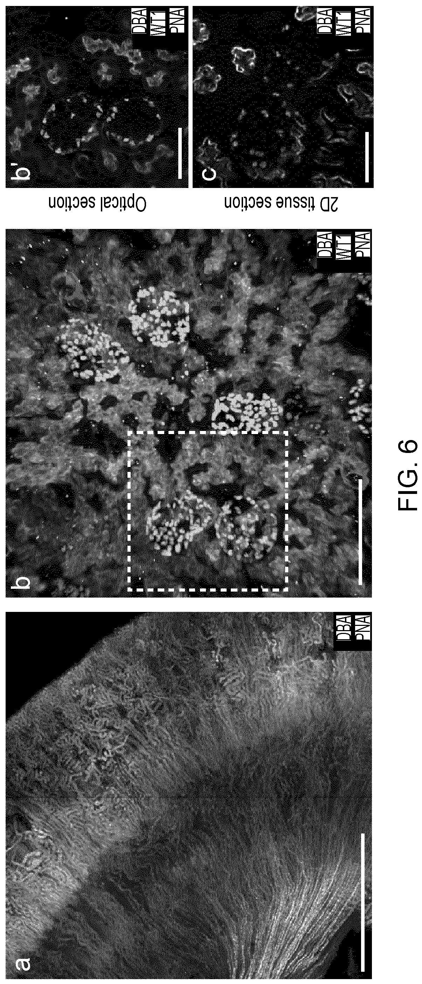

**Figure 6****. FLASH enables immunostaining of the kidney. a)** 3D reconstruction of a kidney stained for DBA (collecting ducts and group of tubules) and PNA (distal tubules). Scale bar 1 mm. **b)** Staining for DBA, PNA and WT1 (glormeruli, nuclear). Scale bar 100 µm. **b')** Optical section through the area indicated in (b) (white box). Scale bar 50 µm. **c)** Staining for DBA, PNA and WT1 on a paraffin-embedded kidney section (4 µm). Scale bar 50 µm.

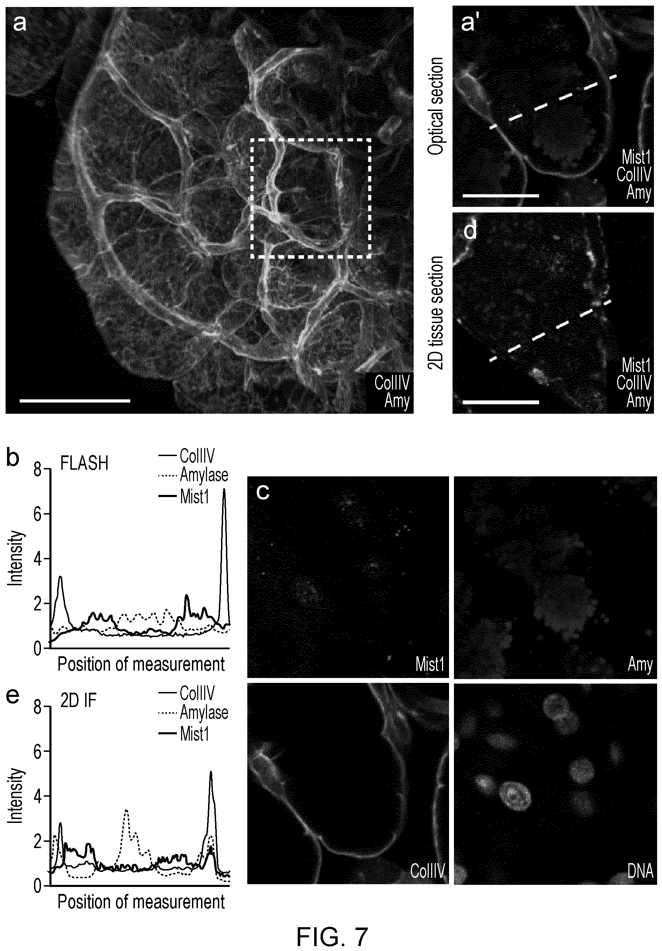

**Figure 7****. Preserved subcellular protein localisation after FLASH. a)** 3D view of a FLASH-treated pancreas showing arrangement of acinar cells (Amy, amylase) in groups (acini) between sheets of CollIV-positive extracellular matrix. Scale bar 50 µm. **a')** Optical section through the area in (a) showing Mist1 (acinar cells, nuclear), Amy and CollIV localization in one acinus. Scale bar 20 µm. **b)** Fluorescent intensity along the indicated line in (a) showing distinct subcellular localisation of the epitopes. **c)** Single-channel images of (a). **d)** Staining for Amy, ColIlV and Mist1 on paraffin-embedded pancreas tissue section (4 µm). Scale bar 20 µm. **e)** Intensity profiles of the fluorophores in (d).

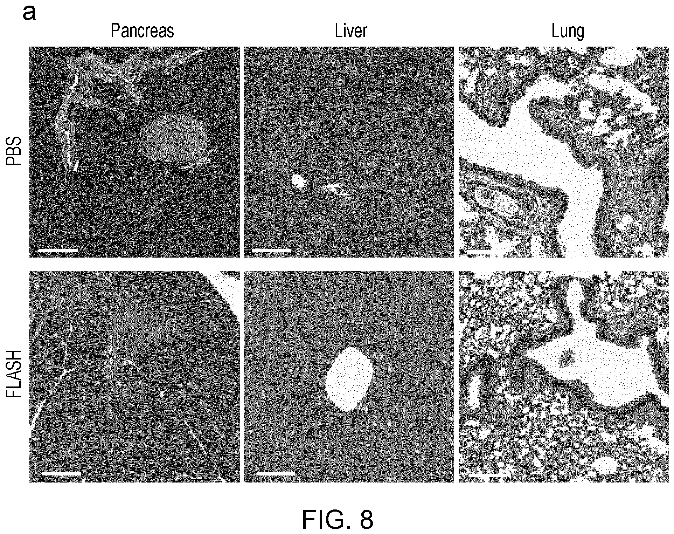

**Figure 8****. Intact tissue morphology after FLASH. a)** Hematoxylin&Eosin (H&E) staining on paraffin-embedded PBS control pancreas, liver and lung (4 µm tissue sections). **b)** H&E staining on FLASH-treated pancreas, liver and lung (4 µm tissue sections) demonstrating preserved tissue morphology and the suitability to use FLASH treated samples for subsequent 2D stainings and histological analysis. All scale bars 100 µm.

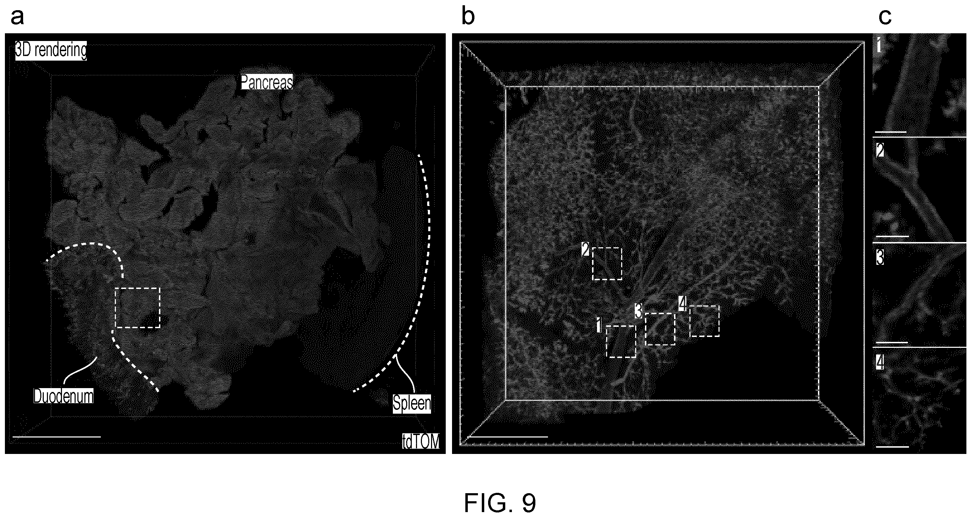

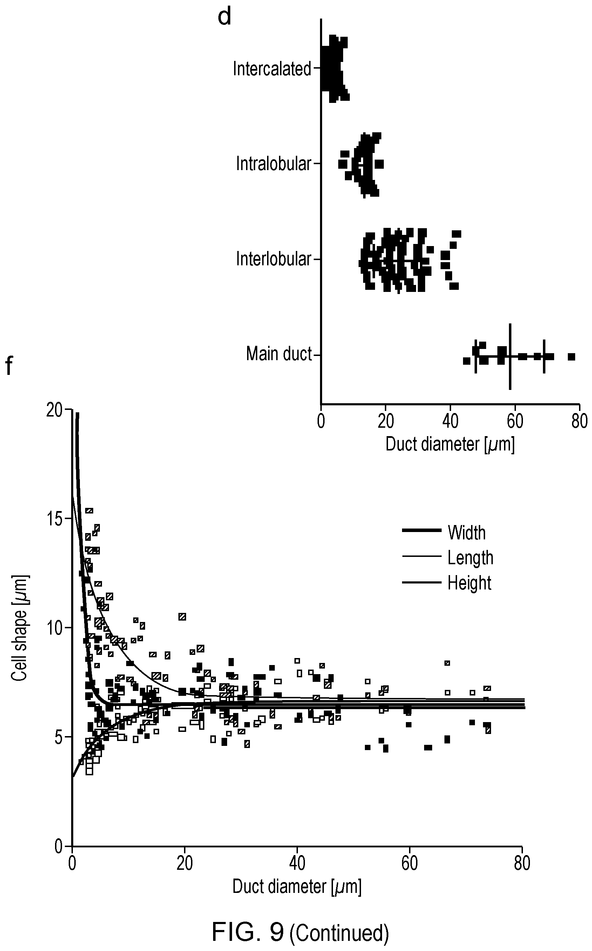

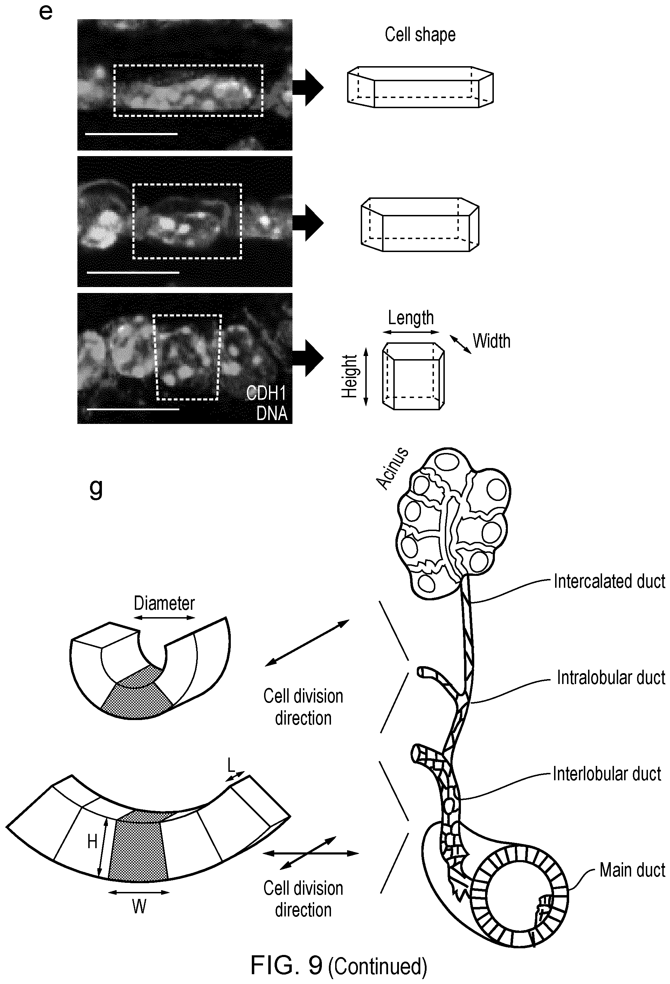

**Figure 9****. FLASH imaging of the intact pancreas and visualisation of the ductal tree.**
   **(a-c)** 3D rendering of tdTomato-stained intact pancreas from tamoxifen-treated *R26-CAG-tdTomato; Hnf1βCreERT2* mouse. **(a)** 3D view of whole pancreas attached to duodenum and spleen. Scale bar 5 mm. **(b)** 3D enlargement of area in (a). Scale bar 500 µm. **(c)** 3D views of ductal segments. **(1)** main duct; **(2)** interlobular duct; **(3)** intralobular duct; **(4)** intercalated ducts. Scale bars 100 µm. **(d)** Segmental heterogeneity of duct diameter. Each dot represents one duct, 180 ducts, 3 mice. **(e)** Pancreas tissue section stained for Cdh1 and DNA to highlight different duct cell shapes. Scale bars 10 µm. **(f)** Segmental heterogeneity of duct cell width (black), height (red) and length (blue); averages of five cells per duct, 115 ducts, 6 mice. Fitted lines obtained using nonlinear regression. **(g)** Illustration of segmental heterogeneity of the ductal tree. L - cell length, W - cell width, H - cell height.

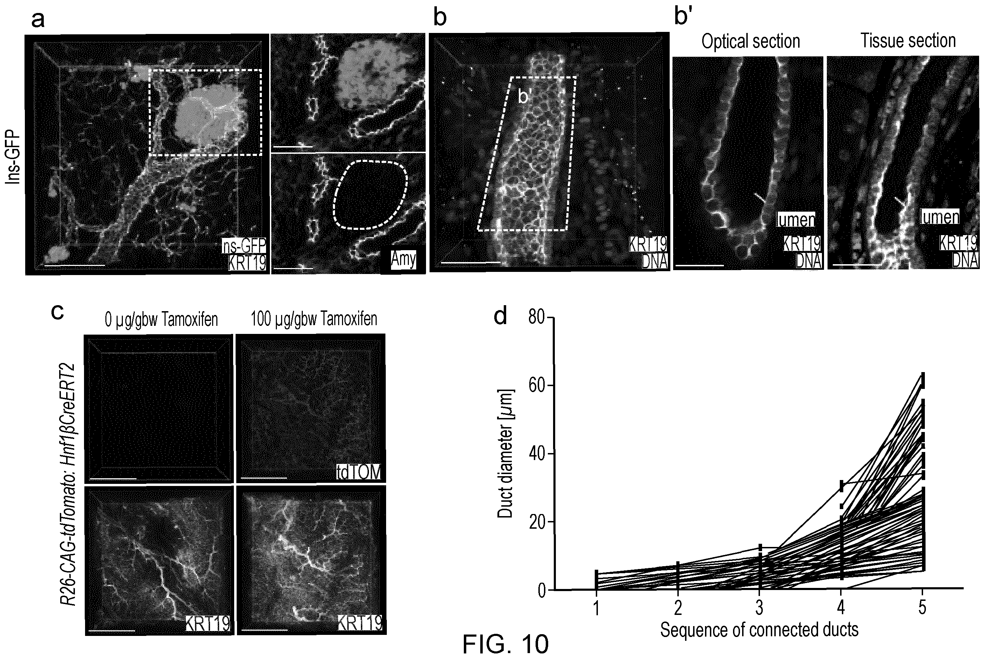

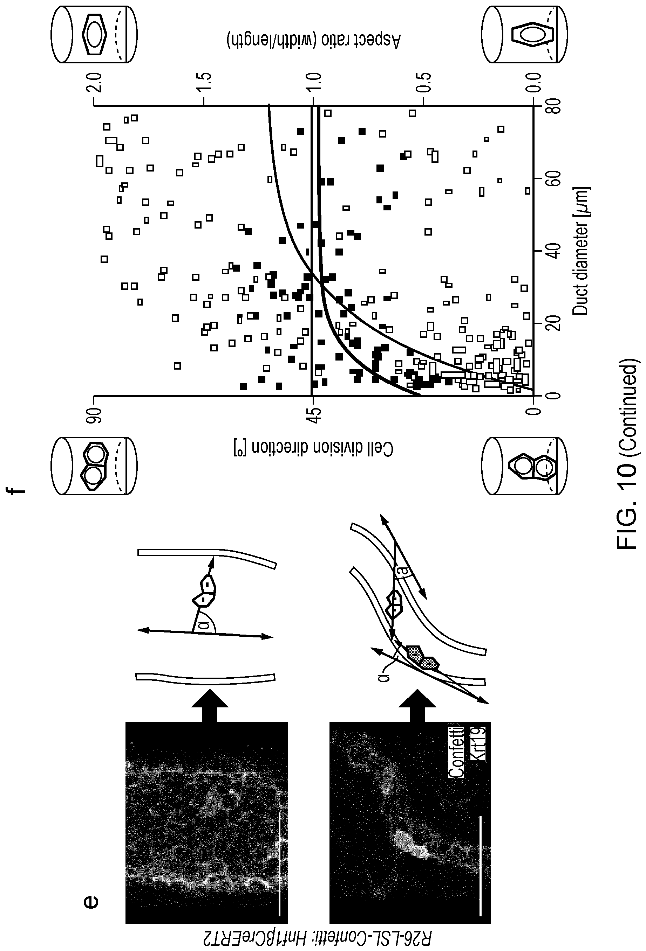

**Figure 10****. Preserved organ integrity after FLASH.**
   **(a)** FLASH staining of an insulin(Ins)-GFP reporter mouse pancreas for amylase (Amy), Krt19 and Ins-GFP. Left, 3D reconstruction demonstrating complex organisation of islets and pancreatic ducts. Scale bar 100 µm. Right, optical section through the indicated area (left) showing preserved compartmentalisation into exocrine and endocrine glands as seen by the mutually exclusive staining for Amy, Krt19 and Ins-GFP. Scale bars 50 µm. **(b)** 3D view of a high-caliber duct (32 µm diameter) stained for Krt19 and DNA, demonstrating preserved epithelial integrity. Scale bar 50 µm. **(b')** Left, optical section through the indicated area in (b) demonstrating the continuous duct cell monolayer and preserved duct lumen. Scale bar 30 µm. Right, staining for Krt19 and DNA on a 4 µm tissue section of paraffin-embedded pancreas. Scale bar 30 µm. **(c)** FLASH staining for tdTomato (tdTOM) and Krt19 on pancreata of *R26-CAG-tdTomato; Hnf1βCreERT2* mice without (left) and with (right) intraperitoneal injection of 100 µg tamoxifen per gram bodyweight. Scale bars 500 µm. **(d)** Arborisation of the ductal tree. Each dot represents one duct and lines indicate ramification. For three Krt19 stained pancreata, z-stacks of at least 30 random high-magnification views were taken. Per view the largest duct was identified and diameters were measured for four subsequent branching ducts to categorise the mode of arborisation. For ducts with more than one furcation, the sequence was continued with the biggest duct ramifying from it. Terminal duct cells were assigned a duct diameter of 0 µm to indicate ending of the ductal tree. **(e)** Cell division direction was measured on two-cell clones from tamoxifen-treated *R26-LSL-Confetti; Hnf1β-CreERt2* mice as the angle determined with respect to the line connecting both nuclei and the directionality of the duct. (263 clones, 5 mice). **(f)** Cell division direction and cell aspect ratio in ducts of varying diameter. Solid lines represent exponential fits.

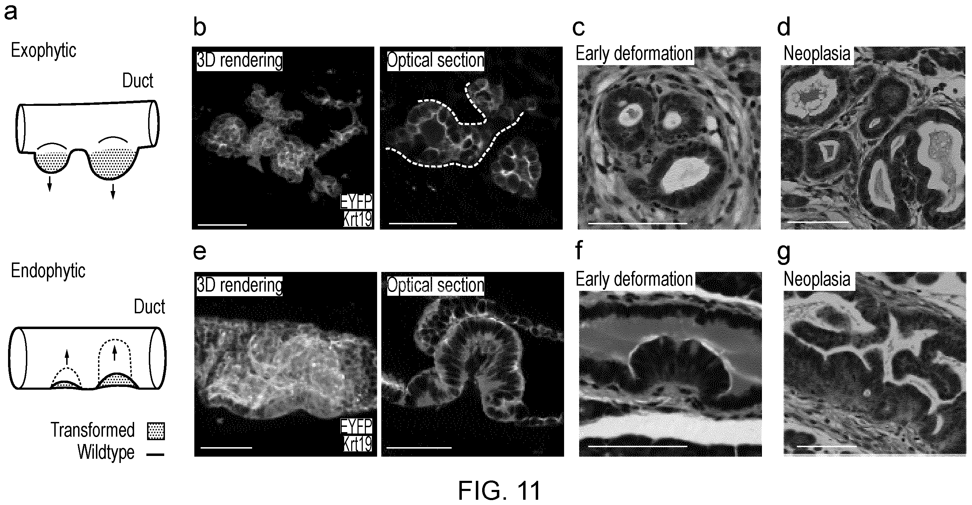

**Figure 11****. Heterogeneity of neoplasia induction in the pancreatic ducts.**
   **(a)** Exophytic and endophytic pancreas ductal deformations. **(b-g)** FLASH comparison with 2D histology. **(b, e)** 3D view (left) and optical section (right) of *KrasG12D; Fbw7 F*/*F; R26-EYFP; Ck19-CreERt* (KFCk19) exophytic **(b)** and endophytic **(e)** deformations 10 days post-recombination. Scale bars 50 µm. **(c-d, f-g)** Hematoxylin-eosin (H&E) staining of exophytic **(c-d)** and endophytic **(f-g)** lesions 10 days **(c, f)** and 21 days **(d, g)** post-recombination. Scale bars 100 µm.

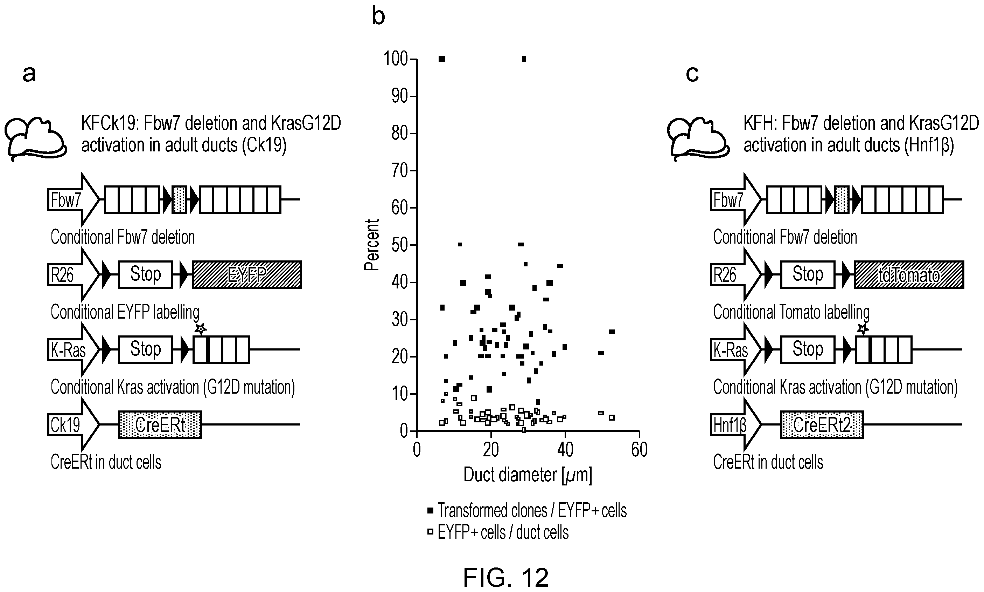

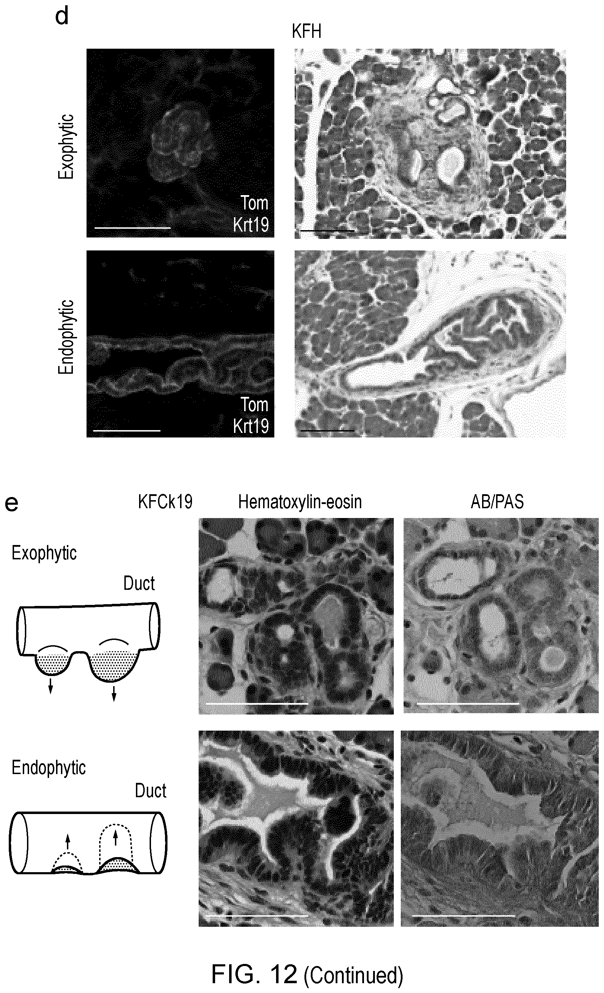

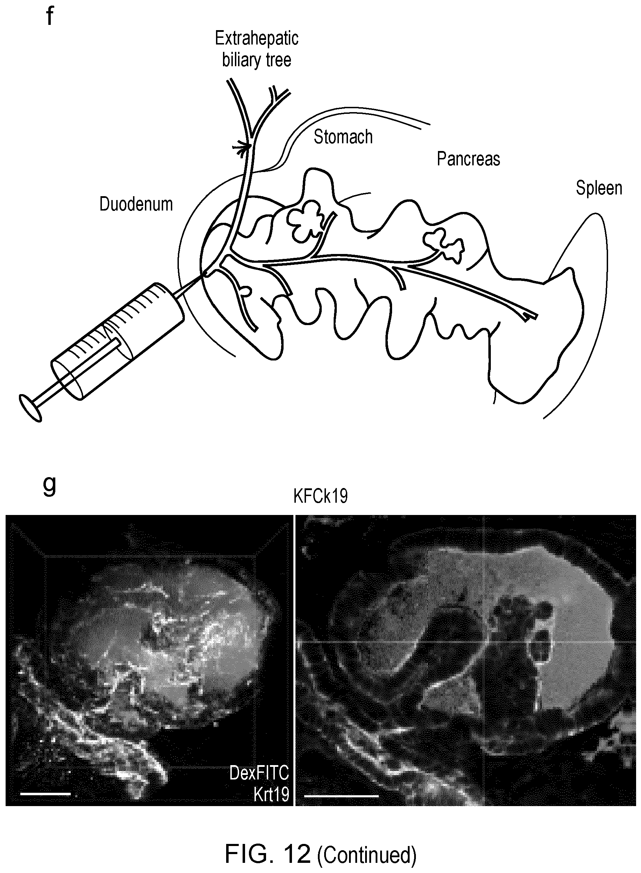

**Figure 12****. Exophytic and endophytic neoplasia *in KrasG12D; Fbw7 F*/*F* model. (a)** KFCk19 mouse model for tumor induction in the ductal epithelium triggered by *Fbw7* exon deletion and *KrasG12D* activation. **(b)** Recombination efficiency of low-dose tamoxifen injection and number of transformed clones per recombined cell were quantified one week after tamoxifen injection in KFCk19 mice. EYFP-traced Krt19⁺ cells were quantified per duct and total number of duct cells estimated by dividing the duct length by the average cell length measured for this duct and multiplying this by the average number of circumscribing cells for this duct. Transformed clones were recognised as groups of more than three EYFP-traced cells sharing an interface. 1 dot represents one duct (112 ducts, 3 mice). **(c-d)** KFH mouse model for alternative targeting of pancreatic ducts. **(d)** Left, 3D rendering of exophytic neoplasia (top) and endophytic neoplasia (bottom) of KFH mice. Staining for Krt19 and tdTomato. Scale bars 100 µm. Right, H&E stainings for KFH exophytic (top) and endophytic (bottom) lesions. Scale bars 100 µm. **(e)** H&E and AB/PAS staining for exophytic and endophytic lesions in KFCk19 mice demonstrating non-mucinous character typical of duct-derived neoplasia. Scale bars 100 µm. **(f)** Experimental strategy for visualizing the connection of exophytic neoplasia with the ductal tree. The extrahepatic bile duct was cannulated at the ampulla and the pancreas ductal tree perfused with 50 µl FITC-labelled dextran. **(g)** DexFITC uptake by an exophytic KFCk19 lesion demonstrating lesion connection to the ductal system. Left, 3D view and right, optical section. Scale bars 50 µm.

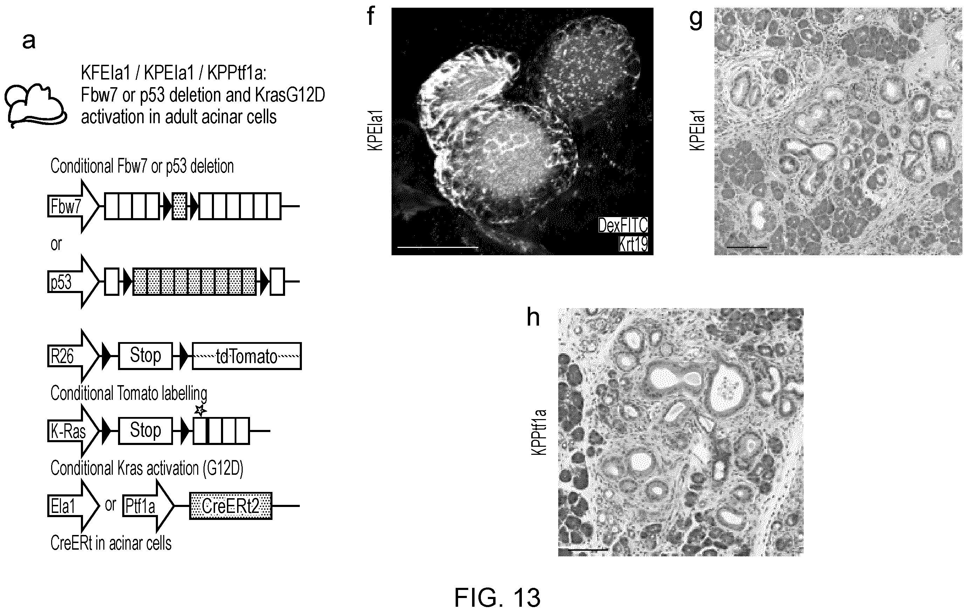

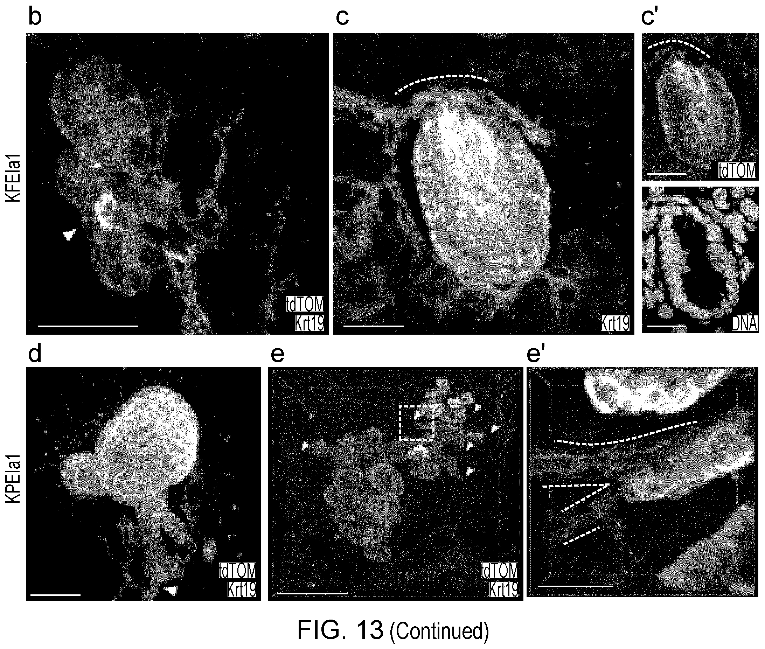

**Figure 13****. Morphology progression of acinar-derived neoplasia.**
   **(a)** Schematic illustrating genetic strategy for acinar cell transformation by *KrasG12D* activation with concomitant *P53 F*/*F* or *Fbw7 F*/*F* deletion using Ela1-CreERt or Ptf1a-ERt2 drivers. **(b-c)** *KrasG12D; Fbw7 F*/*F; Ela1-CreERt* mice (KFEla1). **(b)** 3D view of acinar-to-ductal metaplasia as identified by local upregulation of Krt19 expression in acinar cells. Shown are td-Tomato-traced acini connected to a terminal duct. Arrow head demarcates Krt19 expression by the middle acinus, forming a small ring of acinar-derived, td-Tomato-traced Krt19⁺ cells. Scale bar 50 µm. **(c)** 3D projection of a globular KFEla1 lesion in contact with a small-calibre duct (dotted line). Scale bar 20 µm. **(c')** Optical sections of the lesion shown in (c) demonstrating td-Tomato tracing (top) and globular morphology (bottom). Scale bars 20 µm. **(d-g)** *KrasG12D; p53 F*/*F; Ela1-CreERt* mice (KPEla1). **(d)** 3D view of a globular td-Tomato-traced KPEla1 lesion connected to a terminal duct (arrow head). Scale bar 50 µm. **(e)** 3D projection of a large KPEla1 lesion showing central grape-like morphology of back-to-back globular structures and maintained connection to several small caliber ducts (arrowheads) at the lesion edge. Scale bar 200 µm. **(e')** Higher magnification of area indicated in (e) demonstrating seamless connection of acinar-derived Krt19⁺ cells and wildtype ductal epithelium (dotted lines). Scale bar 30 µm. **(f)** Retrograde perfusion of the ductal tree with dextran-FITC as in Extended Data Fig. 2f demonstrating direct connection of acinar-derived lesions to the ductal system. 3D view of a KPEla1 lesion. Scale bar 50 µm. **(g)** H&E staining of a KPEla1 lesion demonstrating globular morphology. Scale bar 100 µm. **(h)** *KrasG12D; p53 F*/*F; Ptf1a-CreERt2* (KPPtf1a) mice. H&E staining demonstrating globular morphology of lesions. Scale bar 100 µm.

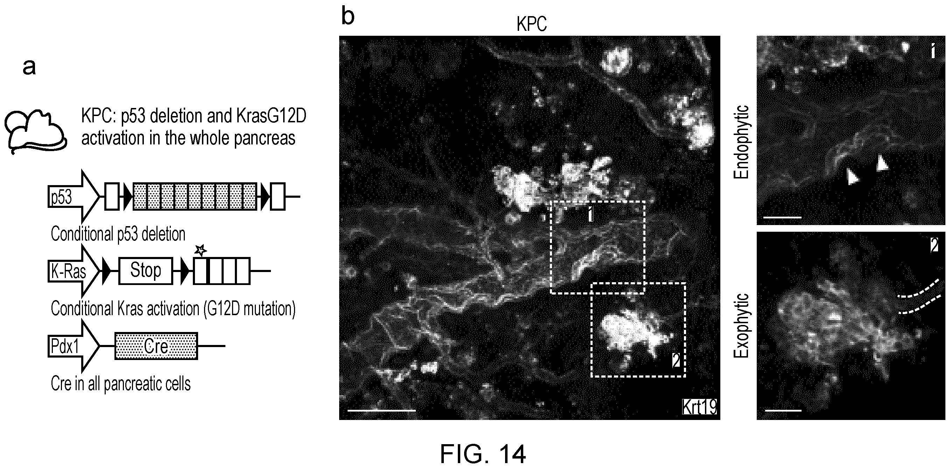

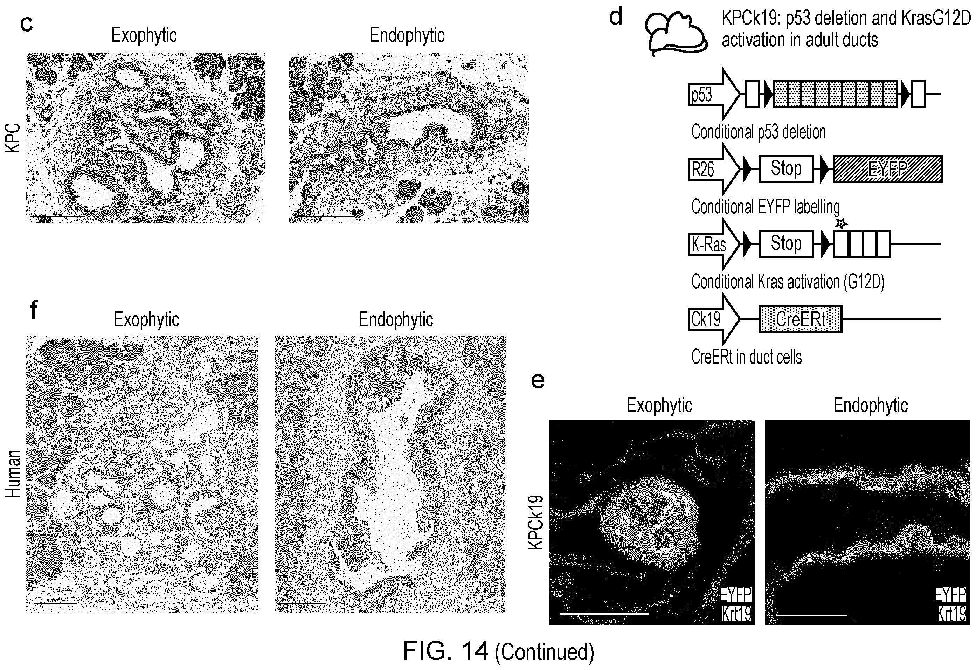

**Figure 14****. Exophytic and endophytic neoplasia in *KrasG12D; p53 F*/*F* model and in human pancreas.**
   **(a-c)** Endophytic and exophytic lesions induced by *p53* deletion with *KrasG12D* activation upon Pdx1-Cre-induced whole-pancreatic recombination (KPC). **(b)** 3D view of a pancreatic region with endophytic (1) and exophytic (2) deformations. Scale bar 150 µm. **(1-2)** Higher magnifications of the indicated areas in (b). Scale bars 50 µm. **(1)** Arrowheads demarcate invaginations typical of endophytic growth. **(2)** Dotted line marks a morphologically normal small-calibre duct in contact with a globular, exophytic lesion. **(c)** Hematoxylin-eosin (H&E) staining for exophytic (left) and endophytic (right) lesions in the KPC model. Scale bars 100 µm. **(d-e)** Exophytic and endophytic lesions induced by *p53* deletion with *KrasG12D* activation in pancreatic ducts (Ck19-CreERt; KPCk19). **(e)** 3D projection of exophytic (left) and endophytic (right) lesion shapes in KPCk19 mice. Scale bars 100 µm. **(f)** H&E staining of tissue sections from background pancreas of a patient presenting with pancreatic ductal adenocarcinoma. (Left) Exophytic lesion. (Right) Endophytic lesion. Scale bars 100 µm.

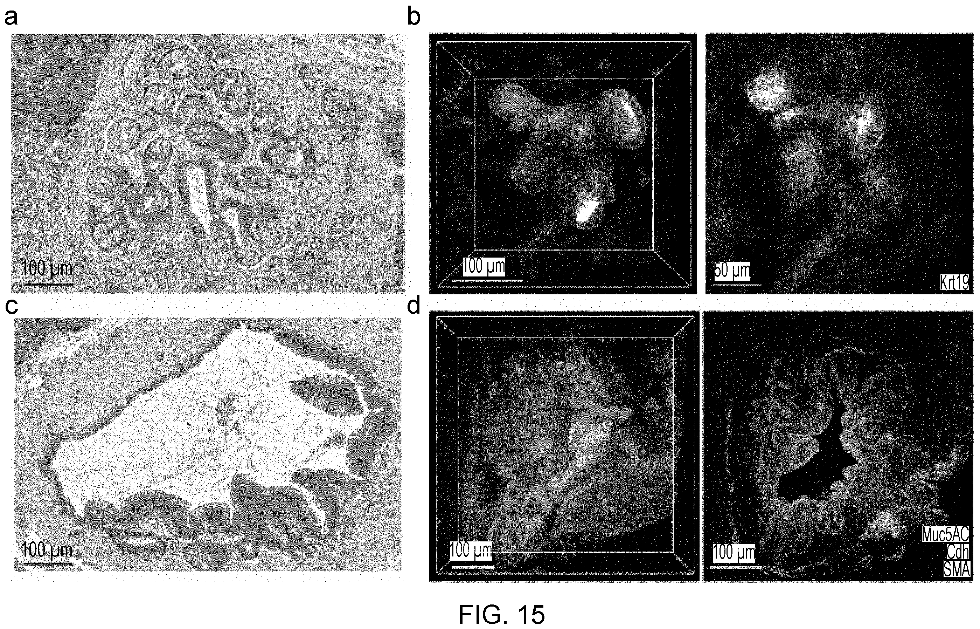

**Figure 15****. FLASH 3D imaging of human biopsies.**
   **(a-b)** Exophytic lesion of a human pancreas. **(a)** H&E staining of a tissue section from human pancreas. Scale bar 100 µm. **(b)** Human pancreatic biopsy imaged with FLASH, showing an exophytic ductal lesion identified by Krt19 immunolabelling. Left, 3D view. Right, optical section. **(c-d)** Endophytic lesion. (c) H&E staining of human pancreas. Scale bar 100 µm. **(d)** Human pancreatic biopsy imaged with FLASH, showing an endophytic ductal lesion identified by Cdh1 immunolabelling (green). Mucinous cells are identified with Muc5AC immunostaining (red) and surrounding stroma with SMA staining (white). Left, 3D view. Right, optical section.

### DETAILED DESCRIPTION OF INVENTION

### 3D IMAGING

The present invention allows for the visualisation of molecularly labelled structures within large intact tissues in three dimensions.

3D imaging may be carried out by methods which will be known to those skilled in the art in this field. For example, 3D imaging may be carried out by light microscopy, fluorescence microscopy, such as confocal microscopy, light sheet microscopy, super resolution microscopy, spectral precision distance microscopy, stimulated emission depletion, expansion microscopy, or optical projection tomography and any variations thereof.

In a preferred aspect of the invention as described herein, the 3D imaging is based on immunostaining.

The present invention facilitates or enables immunostaining of tissue samples for 3D imaging. The invention facilitates antibody staining of the tissue sample. The present invention is based on membrane solubilisation with antigen retrieval without disrupting tissue architecture. Unlike previous techniques, as demonstrated herein, the invention enables robust staining of a wide variety of tissue types with a high signal to noise ratio.

"Immunostaining" as used herein refers to any use of an antibody-based method to detect a specific protein in a sample, such as immunolabelling or immunohistochemical staining of tissue sections.

In one aspect, the invention facilitates immunostaining of a tissue sample prior to 3D imaging. Immunohistochemistry, or IHC, or immunolabelling of tissue sections (or immunocytochemistry or immunofluorescence labelling, which is the staining of cells), are perhaps the most commonly applied immunostaining techniques. While immunolabelling and immunofluorescence labelling use fluorescent dyes, immunohistochemistry and immunocytochemistry use enzymes such as peroxidase and alkaline phosphatase. These enzymes are capable of catalysing reactions that give a coloured product that is easily detectable by light microscopy. Alternatively, radioactive elements can be used as labels, and the immunoreaction can be visualized by autoradiography.

When immunostaining a specific antigen, several methods may be employed. For example, in the method a label (conjugate) may be prepared by directly binding a fluorescent label and a primary antibody and an antigen is then stained (primary antibody method). Alternatively, the label may be prepared by directly binding a fluorescent label and a secondary antibody and an antigen bound with a primary antibody is then stained (secondary antibody method). In a further alternative method a label may be prepared by directly binding a fluorescent label and biotin and an antigen bound with a primary antibody and avidin or a streptavidin-modified secondary antibody is then stained (biotin-avidin method or sandwich method).

Any suitable primary antibody may be used in the immunostaining, and the primary antibody is variable depending on the subject to be immunostained. For example, when immunostaining is performed using HER2 as an antigen, an anti-HER2 antibody is used. One skilled in the art would be aware of suitable antibodies for staining.

In one aspect the antigen may be selected from SST, KCNE3, PP, C-Peptide, Ins, CD44, SMA, RFP and derivatives thereof, GFP and derivatives thereof, Krt19, Krt5, Krt14, Krt7, Krt76, Pan-Cytokeratin, WT-1, Epcam, Muc1, Muc5Ac, Muc2, Prox1, Cdh1, Mist1, Lyz, GFAP, TH, PGC, GIF, Endomucin, PGP9.5, PCSK1/3, GS, S100, Aqp1, Aqp2, Gluc, H/K-ATPase, Amy, CC10, SFTPC, CoIIIV, Vim, Ki67, PCNA, Myosin, phospho-histone H3, and cleaved Caspase-3.

Further, any secondary antibody may be used and the secondary antibody is variable depending on the primary antibody. Examples thereof include anti-mouse, rabbit, bovine, goat, sheep, dog and chicken antibodies.

For binding of a fluorescent label with an antibody or biotin, any existing method may be employed. For example, amidation by reaction between amine and carboxylic acid, sulfidation by reaction between maleimide and thiol, imination by reaction between aldehyde and amine, or amination by reaction between epoxy and amine can be used.

Immunostaining is not restricted to tissue staining and can also be applied to cell staining.

In one aspect of the invention, staining is not restricted to antibodies, and any substance that interacts with the sample may be used. For example, dyes interacting with biochemical structures, such as DNA-intercalating dyes like Dapi, Syto11, Propidium iodide, Draq5 may be used, or agents that interact with biochemical properties or reactive groups of tissue constituents, for examples lectins like dolichos biflorus agglutinin, wheat germ agglutinin, peanut agglutinin or ulex europaeus agglutinin that detect certain posttranslational modifications in proteins may be used. Detection is not restricted to fluorescent labels conjugated to antibodies and may also be combined with inherently fluorescent dyes, or secondary labelling by click-it chemistry.

In one aspect 3D imaging is not restricted to staining, and may also involve the detection of sample inherent signals such as second harmonics generation and imaging of fluorescent proteins.

### BUFFER SOLUTION

A buffer solution (more precisely, pH buffer or hydrogen ion buffer) is an aqueous solution consisting of a mixture of a weak acid and its conjugate base, or vice versa. The pH of a buffer changes very little when a small amount of strong acid or base is added to it. Buffer solutions are used as a means of keeping pH at a nearly constant value in a wide variety of applications.

The buffer solution according to the present invention may be any suitable buffer which has a pH below 9 for preparing tissue samples for 3D imaging.

In one aspect, the buffering agent may be selected from citric acid, acetic acid, borate, CHES, KH₂PO₄, Na₂HPO₄, TAPS ([Tris(hydroxymethyl)methylamino]propanesulfonic acid), Bicine (2-(Bis(2-hydroxyethyl)amino)acetic acid), Tris (Tris(hydroxymethyl)aminomethane) or, (2-Amino-2-(hydroxymethyl)propane-1,3-diol), Tricine (3-[N-Tris(hydroxymethyl)methylamino]-2-hydroxypropanesulfonic acid), TAPSO (3-[N-Tris(hydroxymethyl)methylamino]-2-hydroxypropanesulfonic acid), HEPES (4-(2-hydroxyethyl)-1-piperazineethanesulfonic acid), TES (2-[[1,3-dihydroxy-2-(hydroxymethyl)propan-2-yl]amino]ethanesulfonic acid), MOPS (3-(N-morpholino)propanesulfonic acid), PIPES (Piperazine-N,N'-bis(2-ethanesulfonic acid)), cacodylate (Dimethylarsenic acid), MES (2-(N-morpholino)ethanesulfonic acid), and combinations thereof. In one aspect the buffer solution may be phosphate buffered saline (PBS).

In a preferred aspect the buffer solution is a boric acid or citrate buffered solution.

In one aspect the boric acid solution is at a concentration of about 50 to 500mM, for example, about 50, 100, 200, 250, 300, 350, 400, 450 or 500mM. In one aspect the concentration is about 200mM.

In one aspect the pH of the buffer is in the range of about pH3 to a pH below 9. In one aspect the pH of the buffer is in the range of about pH4 to a pH below 9. In one aspect the pH of the buffer is in the range of about pH5 to a pH below 9. In one aspect the pH of the buffer is in the range of about pH6 to a pH below 9. In one aspect the pH of the buffer is in the range of about pH7 to a pH below 9. In one aspect the pH of the buffer is in the range of about pH8 to a pH below 9.

In one aspect the pH of the buffer is about 8.9, 8.8, 8.7, 8.6, 8.5, 8.4, 8.3, 8.2, 8.1, 8.0, 7.9. 7.8, 7.7, 7.6, 7.5, 7.4, 7.3, 7.2, 7.1, 7.0, 6.9, 6.8, 6.7, 6.6, 6.5, 6.4, 6.3, 6.2, 6.1, 6.0, 5.9, 5.8, 5.7, 5.6, 5.5, 5.4, 5.3, 5.2, 5.1, 5.0, 4.9, 4.8, 4.7, 4.6, 4.5, 4.4, 4.3, 4.2, 4.1, 4.0, 3.9, 3.8, 3.7, 3.6, 3.5, 3.4, 3.3, 3.2, 3.1 or 3.0.

In a preferred aspect the pH of the buffer is about 7.0.

### TEMPERATURE

In one aspect the solution according to the invention is for use or to be used at a temperature between about 30°C and about 100°C. For example, the solution may be used at a temperature of between about 40°C and 95°C, about 50°C and about 90°C, about 55°C and 85°C, about 60°C and about 80°C, or about 65°C and 75°C. In a preferred aspect of the invention the solution is used at a temperature of between about 50°C and 60°C, preferably about 55°C. The solution according to the invention may be used at a temperature selected from about 30, 35, 40, 45, 50, 55, 60, 65, 70, 75, 80, 85, 90 and 95°C.

### DETERGENT

Suitable detergents for use in the invention are detergents used in standard methods of tissue sample preparation.

In one aspect, the detergent is selected from a non-ionic, ionic or zwitterionic detergent. In one aspect, the detergent is an ionic detergent. In one aspect, the detergent is a zwitterionic detergent.

A non-ionic detergent may be selected from BigCHAP (N,N-Bis[3-(D-gluconamido)propyl]cholamide), Brij^{®} 35 (Polyethylene glycol dodecyl ether), C12E8 (Octaethylene Glycol Monododecyl Ether), C12E9 (Polyoxyethylene(9)dodecyl Ether), Decyl-β-glucoside, Decyl-β-maltoside, Deoxy-BigCHAP (N,N-Bis[3-(D-gluconamido)propyl]deoxycholamide), Digitonin, Dodecyl-β-glucoside, Dodecyl maltoside, Lubrol PX, Nonidet^{™} P-40 (Octylphenoxy poly(ethyleneoxy)ethanol, branched), Octyl-β-glucoside, Octyl-β-maltoside, Octyl-β-thiogalactoside, Octyl-β-thioglucoside, PLURONIC^{®} F-127 (Polyoxypropylenepolyoxyethylene Block Copolymer), Triton^{™} X-100 (4-(1,1,3,3-Tetramethylbutyl)phenyl-polyethylene glycol), Tween^{®} 20 (Polyethylene glycol sorbitan monolaurate) and Tween^{®} 80 (Polyethylene glycol sorbitan monooleate).

In one aspect of the invention, the detergent is an ionic surfactant. An ionic detergent may be selected from sodium cholate, CTAB (Cetyltrimethylammonium bromide), sodium deoxycholate, lithium sulfate, sodium taurocholate and sodium taurodeoxycholate. Preferably, the anionic surfactant is sodium dodecyl sulfate (SDS).

In an alternative aspect, the detergent is a zwitterionic detergent. The polar head groups of zwitterionic detergents contain both negatively and positively charged atomic groups, therefore the overall charge is neutral. The strength of action of these compounds is considered to be intermediate between ionic and non-ionic detergents, sharing characteristics with both types.

A zwitterionic detergent may be selected from CHAPS (3-[(3-Cholamidopropyl)dimethylammonio]-1-propanesulfonate hydrate) and CHAPSO (3-([3-Cholamidopropyl]dimethylammonio)-2-hydroxy-1-propanesulfonate), which are commercially available, for example from Merck.

In one aspect the zwitterionic detergent is a Zwittergent^{®} detergent, which may be selected from Zwittergent^{®}3-08 (n-Octyl-N,N-dimethyl-3-ammonio-1-propanesulfonate), Zwittergent^{®}3-10 (n-Decyl-N,N-dimethyl-3-ammonio-1-propanesulfonate), Zwittergent^{®}3-12 (n-Dodecyl-N,N-dimethyl-3-ammonio-1-propanesulfonate), Zwittergent^{®}3-14 (n-Tetradecyl-N,N-dimethyl-3-ammonio-1-propanesulfonate), and Zwittergent^{®}3-16 (n-Hexadecyl-N,N-dimethyl-3-ammonio-1-propanesulfonate).

In a preferred aspect of the invention the detergent is Zwittergent^{®}3-10 (n-Decyl-N,N-dimethyl-3-ammonio-1-propanesulfonate).

Zwittergent^{®} detergents are commercially available, for example from Calbiochem (Merck KGaA, Damstadt, Germany).

The amount of detergent to be included in the solution according to the present invention may be determined by one skilled in the art.

In a preferred aspect 4% SDS or 8% Zwittergent^{®}3-10 may be used.

### ADDITIVES

To further enhance the staining, compounds that aid antigen retrieval or increase sample penetration may be added to the solution. Compounds supporting antigen retrieval may, for example, be formaldehyde scavengers such as ascorbic acid, urea, tris, 2-imidazolidinone or catalysts such as anthranilates and phosphanilates or proteases such as trypsin or pepsin or collagenase. Compounds supporting sample penetration can be chaotropic agents such as ammonium thiocyanate, n-butanol, dimethyl sulfoxide, ethanol, guanidinium chloride, lithium perchlorate, lithium acetate, urea, magnesium chloride, phenol, 2-propanol,sodium thiocyanate and thiourea, or reducing agents such as 1,4-dithiothreitol, b-mercaptoethanol and Tris(2-carboxyethyl)phosphine hydrochloride.

### TISSUE SAMPLE

The invention as described herein may be applied to any tissue sample.

The tissue sample may be selected from epithelium, connective tissue, muscle tissue and nerve tissue.

In a preferred aspect the tissue sample is selected from pancreatic tissue, brain tissue, bone tissue, bone marrow tissue, lung tissue, liver tissue, stomach tissue, mammary gland tissue, head and neck tissue, intestinal tissue, salivary gland tissue, neural tissue, ovary tissue, testis tissue, muscle tissue and skin tissue.

In one aspect of the invention the tissue sample may be an embryonic tissue sample.

In one aspect, the tissue sample may a diseased tissue sample.

In one aspect the tissue sample may be a tumour sample. The tumour may be from a squamous cell cancer or carcinoma, lung cancer, cancer of the peritoneum, hepatocellular cancer, gastric or stomach cancer including gastrointestinal cancer, pancreatic cancer, glioma, glioblastoma, cervical cancer, ovarian cancer, liver cancer, bladder cancer, hepatoma, melanoma, breast cancer, colon cancer, rectal cancer, colorectal cancer, endometrial cancer or uterine carcinoma, salivary gland carcinoma, kidney or renal cancer, prostate cancer, vulval cancer, thyroid cancer, hepatic carcinoma, anal carcinoma, penile carcinoma, or a head and neck cancer.

In one aspect the tissue sample is not a brain tissue sample.

In one aspect, the tissue sample is an intact tissue sample.

In one aspect, the tissue is a whole tissue or part of a tissue.

In one aspect, the tissue sample has not been serially sectioned.

In one aspect, the tissue sample may be fresh, fixed or frozen.

A fixed tissue sample is a tissue sample that has been treated with any suitable fixative in order to preserve the tissue from decay. Examples of fixatives include 10% Neutral Buffered Formalin (NBS) solution, 4% paraformaldehyde or glutaraldehyde solution.

A frozen tissue sample is a tissue sample that has been cryopreserved. Examples of tissue freezing include tissue immersion in isopentane/ liquid nitrogen or snap freezing on dry ice or in liquid nitrogen.

In one aspect, the tissue sample is a sentinel node biopsy.

A sentinel node biopsy is a surgical procedure used to determine whether cancer has spread beyond a primary tumor into the lymphatic system.

### METHODS

The solution according to the invention as described herein may be used in a method for preparing a tissue sample for 3D imaging.

The method according to the invention may further comprise determining the presence or absence of a disease state in the tissue sample.

By "disease state" it is typically meant that the method may be used to determine whether a subject is suffering from one or more known diseases. Diseases include but are not limited to cancer, autoimmune diseases, inflammatory diseases, metabolic diseases, neurodegenerative diseases, endocrine/reproductive diseases, cardiovascular/pulmonary diseases, musculoskeletal diseases, or gastrointestinal disease.

Thus in particular embodiments, the method of the invention may be used for diagnosing the presence of one or more known diseases. This may involve obtaining tissue samples from one or more patients; detecting the presence of one or more diseases, preferably using antibody staining; and/or monitoring progression of one or more diseases in a subject. The present method may also be used to distinguish a disease from other diseases.

In embodiments of the present invention, the tissue sample is stained with antibodies and 3D imaged. The sample is assessed for abnormal or unusual immunostaining to determine the presence or absence of a disease state in the tissue sample.

It is envisaged that the method according to the present invention may be used as a step in the determination of whether a patient is responding to or has responded to therapeutic treatment by preparing a tissue sample for 3D imaging using the solution according to the invention.

As such, the invention provides a method for preparing a tissue sample for 3D imaging, wherein said method comprises the step of treating a tissue sample with the solution as described herein.

The invention also provides use of the solution as described herein to prepare a tissue sample for 3D imaging.

The solution of the invention may be used for clearing a tissue sample, i.e. to make the tissue sample transparent.

The method according to the invention may optionally comprise additional steps.

The method may comprise a step of fixing the tissue sample. The method may comprise a step of washing the tissue sample. The method may comprise a step of incubating the tissue sample in the solution according to the invention. The method may comprise a step of immunolabelling.

The method may comprise any one or more of the following steps:
1. Tissue removal, with optional vascular perfusion with PBS.
2. Tissue fixation.
3. Optional long-term tissue storage.
4. Wash steps.
5. A step of cleaning the sample from debris and adjacent tissues where applicable. Optionally the sample may be dissected into smaller pieces.
6. Tissue incubation in a solution that enables immunolabelling.
7. Incubation with a primary or secondary antibody.

In one aspect, the method comprises incubating the tissue sample with a solution according to the invention at a temperature between about 30°C and about 100°C. For example, the incubation may be at a temperature of between about 40°C and 95°C, about 50°C and about 90°C, about 55°C and 85°C, about 60°C and about 80°C, or about 65°C and 75°C. In a preferred aspect of the invention the incubation may be at a temperature of between about 50°C and 60°C, preferably about 55°C. The incubation may be at a temperature selected from about 30, 35, 40, 45, 50, 54, 55, 60, 65, 70, 75, 80, 85, 90 and 95°C. In one aspect of the invention as described herein the incubation may be at a temperature of about 54 or 55°C.

The period of incubation may be between about 2 and about 48 hours, for example about 6 to 44, 10 to 40, 14 to 36, 18 to 32, or 22 to 28 hours. In one aspect, the incubation period is about 16 hours. The incubation period may be a matter of days, for example about 1, 2, 3, 4, 5, 6, 7, 8, 9, or 10 days. In one aspect, the incubation period is about 24 hours. In one aspect the incubation period may be a matter of weeks, for example about 1, 2, 3, 4, 5, 6, 7, 8, 9, or 10 weeks.

In one aspect of the invention the solution may be used to prepare a tissue sample for 3D imaging prior to the sample being processed for 2D staining. For example, the tissue sample may undergo 3D imaging prior to being processed for 2D imaging. In one aspect, the tissue sample may be prepared using the solution according to the present invention prior to the sample being embedded in paraffin for the purposes of 2D staining and/or imaging.

In one aspect of the invention, the solution may be used in a method to prepare a tissue sample for 3D imaging for the analysis of human patient material in the clinic.

In another aspect of the invention the solution may be used to prepare a tissue sample for 3D imaging for veterinary medicine.

In another aspect of the invention the solution may be used to prepare a tissue sample for 3D imaging for the analysis of engineered or printed biological tissues.

### KIT

The present invention also encompasses a kit for the preparation of a tissue sample for 3D imaging, wherein said kit comprises a solution according to the present invention.

Said kit may also comprise components to facilitate immunolabelling of said tissue sample, for example one or more antibodies.

The invention will now be further described by way of Examples, which are meant to serve to assist one of ordinary skill in the art in carrying out the invention and are not intended in any way to limit the scope of the invention.

### Example 1

### Materials and methods

**FLASH.** FLASH was developed for the rapid detection of a multitude of antigens in intact adult organs by mild non-destructive epitope recovery (FLASH - Fast Lightmicroscopic analysis of Antibody-stained wHole organs).

Mice were euthanized by cervical dislocation. Cardiac perfusion was carried out with 20 ml PBS. Organs were retrieved and fixed in 10% NBF overnight at 4°C. Specimens were washed in PBT (0.4% Triton X-100 (Sigma-Aldrich) in PBS) twice for one hour. For the buffer comparison in figure 1, samples were incubated in solutions of the indicated composition including 4% SDS for 16 hours. For FLASH staining of various organs shown in figures 2 to 5, specimens were incubated in 200 mM boric acid (Sigma-Aldrich) and 4% SDS (Sigma-Aldrich) pH 7.0 for 16 hours at 54°C. For results shown in figures 6 and 7, samples were incubated in 200 mM boric acid (Sigma-Aldrich) and 8% Zwittergent^{®} 3-10 (Merck) pH 7.0 for 24 hours at 54°C. For figure 8, samples were incubated in PBS (control) or in 200 mM boric acid (Sigma-Aldrich) and 8% Zwittergent^{®} 3-10 (Merck) pH 7.0 for 24 hours at 54°C.

Samples were washed in PBT for three hours or longer with at least three volume exchanges. For immunolabelling, samples were incubated in FLASH blocking buffer (1% bovine serum albumin (Sigma-Aldrich), 5% DMSO (Sigma-Aldrich), 10% fetal calf serum (Gibco), 0.02% sodium azide (Sigma-Aldrich), 0.2% Triton X-100 in PBS) for one hour and incubated with antisera (all 1:100) for at least 16 hours at room temperature on a nutator. Samples were washed by three volume exchanges PBS and incubated with secondary antibodies (all 1:100) for at least two days at room temperature.

Samples were washed by three volume exchanges with PBS and gradually dehydrated in 30%, 50%, 75%, 2x 100% MetOH (Sigma-Aldrich), 1hr each and, in a glass dish, immersed in methyl salicylate diluted in MetOH: 25%, 50%, 75%, 2x 100% methyl salicylate (Sigma-Aldrich), 30 min each, protected from light.

Fluorescent proteins were stained by immunofluorescence. The following antibodies were used: Aqp1 (rabbit, Atlas), Amylase (goat, SCBT), CC10 (goat, SCBT), CD44 (rat, Chemicon), CollIV (rabbit, USBiological), GFP (goat, Abcam), GFP (mouse, Roche), GS (rabbit, Abcam), Krt14 (mouse, Abcam), Krt19 TROMA III (rat, DSHB), Pcsk1 (rabbit, Millipore), Mist1 (mouse, SCBT), Prox1 (rabbit, Abcam), S100 (rabbit, Dako), Sftpc (rabbit, Millipore), SMA (mouse, Sigma-Aldrich), Tomato (rabbit, Rockland), Vim (rabbit, NEB), WT-1 (rabbit, SCBT). All secondary antibodies were Alexa-dye conjugates (ThermoFisher). Nuclei were stained with DRAQ5 (Biostatus). The following lectins were used: DBA-FITC (VectorLabs), DBA-Rhodamine (VectorLabs), PNA-FITC (VectorLabs).

### Results

To enable immunolabelling of intact tissues, we developed a combination of tissue permeabilisation and partial reversal of protein crosslinking in order to recover antigenicity without compromising tissue integrity. We assayed a range of different buffer systems in combination with membrane solubilization and low heat, followed by antibody incubation in a solvent-rich blocking reagent. The fragile, highly compartmentalized architecture of the pancreas is inherently difficult to process for histology as it is prone to damage by the digestive enzyme-rich pancreatic juice. We processed whole pancreatic lobules and labelled pancreatic ducts following incubation in buffer solution in a single over-night antigen retrieval step. Notably, all buffer solutions tested yielded robust staining of ramifying ducts spanning the pancreatic lobules. Whilst mild heat was necessary to achieve staining, higher temperatures perturbed tissue integrity and caused sample loss (Fig. 1). We next treated whole pancreata with FLASH followed by stainings with Amylase, Pcsk1, and Sma antibodies that previously failed on conventionally clarified pancreata. All stainings produced robust signals detectable in three dimensions using standard confocal microscopy in line with antibody performance in traditional 2D staining (Fig. 2).

FLASH was successfully applied to lung, liver and lacrimal gland without further technological adaptations, producing label distribution in three dimensions that was highly coherent with presentation in 2D tissue stainings (Fig. 3-5). The range of antibodies supported enabled the structure of all tissue components to be visualised, sometimes simultaneously, including ducts, vasculature, stroma, innervation, and the lymphatic system as well as tissue-specific cell types such as hepatocytes, pancreatic acinar and lung alveolar cells (Fig. 3-5).

To further expand the range of compatible staining reagents to antibodies that may be sensitive to residual SDS in the FLASH-treated sample, we tested alternative membrane-permeabilising detergents. The zwitterionic detergent Zwittergent-3-10 (FLASH reagent 2) produced robust immunostaining on all tissues analyzed and improved the performance of difficult antibodies such as those for the transcription factors WT1 and Mist1. Importantly, tissue and cellular integrity were preserved and the subcellular staining distribution correlated with traditional 2D immunofluorescence as before (Fig. 6-7). Thus, FLASH is robust to a range of reagent options, enabling further optimization of the technique for particular antigens of interest.

To further test the effect of FLASH processing on tissue morphology, we embedded FLASH-treated organs in paraffin and analyzed specimens previously imaged in three dimensions by conventional 2D histology. Despite the previous treatments and analysis, the tissues remained receptive to haematoxylin and eosin staining. Tissue architecture remained intact and different compartments such as blood vessels and ducts could readily be identified as in untreated controls (Fig. 8). Thus, FLASH enables deep tissue immunolabelling of intact inner organs while maintaining epithelial integrity and tissue architecture.

### Example 2 - imaging of the adult pancreatic ductal system

### Materials and methods

**FLASH.** FLASH was developed for the rapid detection of a multitude of antigens in intact adult organs by mild non-destructive epitope recovery (FLASH - Fast Lightmicroscopic analysis of Antibody-stained wHole organs).

Mice were euthanized by cervical dislocation. Cardiac perfusion was carried out with 20 ml PBS. Pancreata were removed attached to spleen and duodenum without perturbing the gland. Samples were fixed in 4% PFA overnight at 4°C. Specimens were washed in PBT (0.4% Triton X-100 (Sigma-Aldrich) in PBS) twice for one hour and incubated in 200 mM boric acid (Sigma-Aldrich) with 4% SDS (Sigma-Aldrich) pH 7.0 overnight at 54°C.

Samples were washed in PBT for three hours with three volume exchanges. For immunolabelling, samples were incubated in FLASH blocking buffer (1 % bovine serum albumin (Sigma-Aldrich), 5% DMSO (Sigma-Aldrich), 10% fetal calf serum (Gibco), 0.02% sodium azide (Sigma-Aldrich), 0.2% Triton X-100 in PBS) for one hour and incubated with antisera (all 1:100) for at least 16 hours at room temperature on a nutator. Samples were washed by three volume exchanges PBS and incubated with secondary antibodies (all 1:100) for at least two days at room temperature.

Samples were washed by three volume exchanges with PBS and gradually dehydrated in 30%, 50%, 75%, 2x 100% MetOH (Sigma-Aldrich), 1hr each and, in a glass dish, immersed in methyl salicylate diluted in MetOH: 25%, 50%, 75%, 2x 100% methyl salicylate (Sigma-Aldrich), 30 min each, protected from light.

Fluorescent proteins were stained by immunohistochemistry. The following antibodies were used: Amylase (goat, SCBT), GFP (goat, Abcam), GFP (mouse, Roche), Krt19 TROMA III (rat, DSHB),Tomato (rabbit, Rockland). All secondary antibodies were Alexa-dye conjugates (ThermoFisher). Nuclei were stained with DRAQ5 (Biostatus).

### Results

To preserve the geometric complexity of the adult pancreas, we developed a new technique for rapid whole-organ 3-dimensional immunostaining and imaging (FLASH, see methods) allowing robust quantitative assessment of organ architecture at the single-cell and tissue level. FLASH maintained pancreatic compartmentalisation and tissue integrity (Fig. 10a, b). We visualised the adult pancreatic ductal system by inducing expression of tdTomato in all duct cells (*R26-CAG-tdTomato; Hnf1b-CreERt2*)*.* FLASH imaging of whole pancreata revealed an intricate hierarchy of tubules spanning the exocrine lobules (Fig. 9a, b, Fig.10c, d). Ductal segments varied significantly in diameter (Fig. 9c, d), with smaller ducts composed of elongated cells and large ducts of cuboidal cells (Fig. 9, e, f). Confetti labelling showed clonal expansion predominantly along the cell elongation axis (Fig.10e, f). These findings illuminate the complexity and heterogeneity of the pancreas ductal system (Fig. 9g).

To trigger epithelial deformations, we induced conditional mosaic activation of the KrasG12D oncogene with concomitant deletion of either p53 or Fbw7 tumour suppressors. FLASH analysis of *KrasG12D; Fbw7 F*/*F; Ck19-CreERt* (KFCk19) and *KrasG12D; Fbw7 F*/*F; Hnf1β-CreERt*(KFH) mice revealed two morphologically distinct lesion types co-occurring in all pancreata analysed. Transformed ducts either evaginated basally, away from the duct lumen (designated "exophytic"), or invaginated apically, towards the duct lumen (designated "endophytic") (Fig. 11a and Fig. 12a-d). Exophytic lesions extended the duct lumen and formed globular structures (Fig. 11b, c, Fig. 12e-g), which progressed to back-to-back gland-like ductal neoplasia (Fig. 11d). Endophytic lesions, in contrast, grew into the duct lumen in a papillary manner (Fig. 11e, f, Fig. 12e), and progressed to intratubular neoplasia with local obstruction of the duct lumen (Fig. 11g). Activation of KrasG12D and deletion of Fbw7 or p53 in acinar cells, located at the tips of small calibre ducts, induced acinar-to-ductal metaplasia (ADM), leading to Krt19-positive globular lesions continuous with the ductal tree (Fig. 13a-f). In mice with duct-specific (KPCk19) or pancreas-wide (KPC) KrasG12D activation and p53 deletion, we also identified exophytic and endophytic lesions, indicating that these observations are not dependent on a particular oncogene combination (Fig. 14a-e).

### Example 3 - 3D imaging of human tissue biopsies

### Materials and methods

**FLASH.** Human tissue biopsies were obtained from consented patients with pancreatic ductal adenocarcinoma. Biopsies were fixed in 10% NBF over night and processed with FLASH immediately, or embedded in paraffin for archival. To perform FLASH on archival material, paraffin-embedded samples were first deparaffinized by incubation in HistoClear or xylene for 30min, followed by washes in EtOH and stepwise rehydration by 30min washes in 90%, 75%, 30% EtOH, followed by 2x ddH2O. Specimens were incubated in 200 mM boric acid (Sigma-Aldrich) with 8% Zwittergent^{®}3-10 (Merck) pH 7.0 overnight at 54°C.

Samples were washed in PBT for three hours with three volume exchanges. For immunolabelling, samples were incubated in FLASH blocking buffer (1% bovine serum albumin (Sigma-Aldrich), 5% DMSO (Sigma-Aldrich), 10% fetal calf serum (Gibco), 0.02% sodium azide (Sigma-Aldrich), 0.2% Triton X-100 in PBS) for one hour and incubated with antisera (all 1:100) for at least 16 hours at room temperature on a nutator. Samples were washed by three volume exchanges PBS and incubated with secondary antibodies (all 1:100) for at least two days at room temperature. Samples were washed by three volume exchanges with PBS and gradually dehydrated in 30%, 50%, 75%, 2x 100% MetOH (Sigma-Aldrich), 1hr each and, in a glass dish, immersed in methyl salicylate diluted in MetOH: 25%, 50%, 75%, 2x 100% methyl salicylate (Sigma-Aldrich), 30 min each, protected from light.

Fluorescent proteins were stained by immunohistochemistry. The following antibodies were used: Cdh1 (rat, Novex), Krt19 TROMA III (rat, DSHB), Muc5AC (rabbit, Atlas), SMA (mouse, Sigma-Aldrich). All secondary antibodies were Alexa-dye conjugates (ThermoFisher).

### Results

To test if FLASH can be utilized for the analysis of human tissue samples, for example in clinical histopathology, we performed a comparison of conventional biopsy analysis by standard histology on tissue sections, with FLASH-3D imaging of intact biopsies. Specifically, we compared optical 2D sections of FLASH-imaged samples with 2D tissue sections of standard-processed samples. We found that FLASH enabled the immunolabelling and optical clarification of fresh, fixed and paraffin-embedded biopsies. We detected exophytic and endophytic lesions in the FLASH-cleared samples (Fig.15 a-d). FLASH-immunolabelling identified ductal and mucinous characteristics, and mesenchymal cells in the biopsies in the spatial context of surrounding normal and cancerous pancreatic tissue regions. 2D optical sections of the 3D-imaging datasets reproduced the presentation of tissue and lesion morphology in standard histopathological analysis of tissue sections (Fig.15 a, c). Thus, FLASH enables rapid histopathological characterization of human material.All documents referred to herein are hereby incorporated by reference in their entirety, with special attention to the subject matter for which they are referred. Various modifications and variations of the described methods and system of the invention will be apparent to those skilled in the art without departing from the scope and spirit of the invention.

Although the invention has been described in connection with specific preferred embodiments, it should be understood that the invention as claimed should not be unduly limited to such specific embodiments. Indeed, various modifications of the described modes for carrying out the invention which are obvious to those skilled in molecular biology, cellular immunology or related fields are intended to be within the scope of the following claims.

The invention will now be described in further detail in the following numbered paragraphs:
1. A solution for preparing a tissue sample for three dimensional (3D) imaging, wherein said solution comprises a buffer solution with a pH below 9 and a detergent.
2. The solution according to paragraph 1 wherein said 3D imaging is based on immunostaining.
3. The solution according to paragraph 1 or paragraph 2 wherein the detergent is SDS.
4. The solution according to paragraph 1 or paragraph 2 wherein the detergent is a zwitterionic detergent.
5. The solution according to paragraph 4 wherein said zwitterionic detergent is a Zwittergent^{®} detergent.
6. The solution according to any one of paragraphs 1 to 5 wherein the pH of said buffer solution is about 7.
7. The solution according to any one of paragraphs 1 to 6 wherein said buffer solution is boric acid or citrate buffered solution.
8. The solution according to any one of paragraphs 1 to 7 wherein said solution is used at a temperature of between about 40°C and about 60°C.
9. The solution according to paragraph 8 wherein said solution is used at a temperature of about 55°C.
10. The solution according to any one of paragraphs 1 to 9, wherein said tissue sample is from a mouse, rat, rabbit, cow, pig or non-human primate.
11. The solution according to paragraph 10, wherein said tissue sample is from a human.
12. A method for preparing the solution according to any one of paragraphs 1 to 11, said method comprising combining said buffer solution with a pH below 8 with said detergent.
13. A method for preparing a tissue sample for 3D imaging, said method comprising treating said tissue sample with a solution according to any one of paragraphs 1 to 11.
14. Use of a solution according to any one of paragraphs 1 to 11 for preparing a tissue sample for 3D imaging.
15. A kit for preparing a tissue sample for 3D imaging, wherein said kit comprises a solution according to any one of paragraphs 1 to 11.

### Further numbered paragraphs:

Various preferred features and embodiments of the present invention will now be described with reference to the following numbered paragraphs:
1. A method for preparing a tissue sample for 3D imaging, said method comprising treating said tissue sample with a solution, wherein the solution comprises a buffer solution with a pH below 9 and a detergent.
2. A method for preparing a tissue sample for 3D imaging, said method comprising:
   a) providing a tissue sample;
   b) optionally fixing the tissue sample;
   c) optionally archive storing the tissue sample;
   d) treating the tissue sample with a solution, wherein the solution comprises a buffer solution with a pH below 9 and a detergent; and
   e) immunolabelling the tissue sample.
3. The method according to paragraphs 1 or 2, wherein said tissue sample has not been hydrogel embedded and/or has not been fixed with glutaraldehyde.
4. The method according to any preceding paragraphs, wherein said 3D imaging is based on immunostaining.
5. The method according to any preceding paragraph, wherein:
   a) the detergent is SDS or zwitterionic, preferably Zwittergent^{®} detergent, wherein the Zwittergent^{®} detergent is selected from any one of n-Octyl-N,N-dimethyl-3-ammonio-1-propanesulfonate, n-Decyl-N,N-dimethyl-3-ammonio-1-propanesulfonate, n-Dodecyl-N,N-dimethyl-3-ammonio-1-propanesulfonate, n-Tetradecyl-N,N-dimethyl-3-ammonio-1-propanesulfonate, and n-Hexadecyl-N,N-dimethyl-3-ammonio-1-propanesulfonate; and/or
   b) the pH of said buffer solution is less than 8.5, less than 8, less than 7.5 or 7; and/or
   c) the buffer solution is boric acid or citrate buffered solution, preferably boric acid.
6. The method according to any preceding paragraph, wherein said solution is used at a temperature of between about 40°C and about 60°C, preferably about 50°C and about 60°C, more preferably at a temperature of about 55°C or about 54°C.
7. The method according to any preceding paragraph, wherein said tissue sample is from:
   a) a mouse, rat, rabbit, cow, pig or non-human primate; or
   b) a human,
   preferably wherein said tissue sample is a surgically resected sample, a sample of 3D cell culture material (organoids) or a sample of bioengineered tissue.
8. The method according to any preceding paragraph, wherein said tissue sample has been fixed using neutral buffered formalin, preferably 10% neutral buffered formalin.
9. The method according to any preceding paragraph, further comprising determining the presence or absence of a disease state in the tissue sample.
10. The method according to any preceding paragraph wherein said tissue sample has been paraffin embedded.
11. The method according to any preceding paragraph, wherein said tissue sample is an intact tissue sample.
12. A solution for preparing a tissue sample for three dimensional (3D) imaging, wherein said solution comprises a buffer solution with a pH below 9 and a detergent.
13. The solution according to paragraph 12 wherein said 3D imaging is based on immunostaining.
14. The solution according to paragraph 12 or 13 wherein:
   a) the detergent is SDS or zwitterionic, preferably Zwittergent^{®} detergent, wherein the Zwittergent^{®} detergent is selected from any one of n-Octyl-N,N-dimethyl-3-ammonio-1-propanesulfonate, n-Decyl-N,N-dimethyl-3-ammonio-1-propanesulfonate, n-Dodecyl-N,N-dimethyl-3-ammonio-1-propanesulfonate, n-Tetradecyl-N,N-dimethyl-3-ammonio-1-propanesulfonate, and n-Hexadecyl-N,N-dimethyl-3-ammonio-1-propanesulfonate; and/or
   b) the pH of said buffer solution is less than 8.5, less than 8, less than 7.5 or 7; and/or
   c) the buffer solution is boric acid or citrate buffered solution, preferably boric acid.
15. The solution according to any one of paragraphs 12 to 14 wherein said solution is used at a temperature of between about 40°C and about 60°C, preferably about 50°C and about 60°C, more preferably at a temperature of about 55°C or about 54°C.
16. The solution according to any one of paragraphs 12 to 15, wherein said tissue sample is from:
   a) a mouse, rat, rabbit, cow, pig or non-human primate; or
   b) a human,
   preferably wherein said tissue sample is a surgically resected specimen, a sample of 3D cell culture material (organoids) or a sample of bioengineered tissue.
17. A method for preparing the solution according to any one of paragraphs 12 to 16, said method comprising combining said buffer solution with a pH below 8 with said detergent.
18. Use of a solution according to any one of paragraphs 12 to 16 for preparing a tissue sample for 3D imaging.
19. Use of a solution according to paragraph 18 for determining the presence or absence of a disease state.
20. A kit for preparing a tissue sample for 3D imaging, wherein said kit comprises a solution according to any one of paragraphs 12 to 16.

## Claims

1. A solution for preparing a tissue sample for three dimensional (3D) imaging, wherein said solution comprises a buffer solution with a pH below 9 and a detergent, wherein the detergent is selected from any one of n-Octyl-N,N-dimethyl-3-ammonio-1-propanesulfonate, n-Decyl-N,N-dimethyl-3-ammonio-1-propanesulfonate, n-Dodecyl-N,N-dimethyl-3-ammonio-1-propanesulfonate, n-Tetradecyl-N,N-dimethyl-3-ammonio-1-propanesulfonate, and n-Hexadecyl-N,N-dimethyl-3-ammonio-1-propanesulfonate.

2. The solution according to claim 1, wherein the buffer solution is a boric acid or citrate buffered solution, preferably boric acid.

3. The solution according to claim 1 or claim 2, wherein the pH of the buffer solution is less than 8.5, less than 8.0, less than 7.5, preferably wherein the pH of the buffer solution is about 7.0.

4. The solution according to any one of the preceding claims, wherein the detergent is n-Decyl-N, N-dimethyl-3-ammonio-1-propanesulfonate.

5. The solution according to any one of the preceding claims, wherein said 3D imaging is based on immunostaining.

6. The solution according to any one of the preceding claims, wherein said solution is used at a temperature of between about 40°C and about 60°C, preferably about 50°C and about 60°C, more preferably at a temperature of about 55°C or about 54°C.

7. The solution according to any one of the preceding claims, wherein said tissue sample is from a mouse, rat, rabbit, cow, pig or non-human primate.

8. The solution according to any one of claims 1 to 6, wherein said tissue sample is from a human.

9. The solution according to claim 7 or claim 8, wherein said tissue sample is a surgically resected specimen, a sample of 3D cell culture material (organoids) or a sample of bioengineered tissue.

10. A method for preparing the solution according to any one of the preceding claims, said method comprising combining said buffer solution with a pH below 9 with said detergent.

11. Use of a solution according to any one of the preceding claims for preparing a tissue sample for 3D imaging.

12. Use of a solution according to claim 11 for determining the presence or absence of a disease state.

13. A kit for preparing a tissue sample for 3D imaging, wherein said kit comprises a solution according to any one of claims 1 to 9.
